# EUROPÄISCHE PATENTSCHRIFT

(11) **EP 3 391 105 B1**
(45) Veröffentlichungstag und Bekanntmachung des Hinweises auf die Patenterteilung: **25.12.2019**
(21) Anmeldenummer: 17780413.5
(22) Anmeldetag: 06.10.2017
(51) Int. Cl.: G02B 5/26, G02B 5/28, G02C 7/10

(54) **BRILLENGLAS MIT BESCHICHTUNG**
SPECTACLE LENS WITH A COATING
VERRE DE LUNETTES COMPORTANT UN REVÊTEMENT

(30) Priorität: 21.10.2016 DE 102016120122
(43) Veröffentlichungstag der Anmeldung: 24.10.2018
(73) Patentinhaber: Carl Zeiss Vision International GmbH, 73430 Aalen (DE)
(72) Erfinder: GLOEGE, Thomas, 73614 Schorndorf (DE); KRAUSE, Michael, 89081 Ulm (DE); LAPPE, Christian, 73557 Mutlangen (DE)
(74) Vertreter: Witte, Weller & Partner Patentanwälte mbB
(86) Internationale Anmeldenummer: PCT/EP2017/075510
(87) Internationale Veröffentlichungsnummer: WO 2018/073023

(56) Entgegenhaltungen:
- EP-A1- 3 081 967
- WO-A1-2012/076714
- WO-A1-2016/110339
- WO-A2-2007/115040
- US-A1- 2015 293 284
- US-B2- 9 291 746
- OPTILAYER LTD: "Features of OptiLayer Software Family", INTERNET CITATION, 21. April 2010 (2010-04-21), Seiten 1-6, XP002579201, Gefunden im Internet: URL:http://www.optilayer.com/features.htm [gefunden am 2010-04-21]
- ALEXANDER TIKHONRAVOV ET AL: "Development of the needle optimization technique and new features of "OptiLayer" design software", VISUAL COMMUNICATIONS AND IMAGE PROCESSING; 20-1-2004 - 20-1-2004; SAN JOSE,, Bd. 2253, 4. November 1994 (1994-11-04), Seiten 10-20, XP007915354, ISBN: 978-1-62841-730-2

## Beschreibung

Die vorliegende Erfindung betrifft ein Brillenglas mit einem Linsensubstrat und einer auf das Linsensubstrat Beschichtung. Die Erfindung betrifft ferner ein computerimplementiertes Verfahren zum Auslegen eines derartigen Brillenglases sowie ein entsprechendes Verfahren zur Herstellung eines Brillenglases.

Es ist bekannt, dass bestimmte Spektralbereiche das menschliche Auge schädigen können, wenn sie mit hoher Intensität oder langer Einwirkungsdauer auf das Auge strahlen. Besonders empfindlich sind die Hornhaut, Linse und Netzhaut. Eine schützende Wirkung im UV-Spektralbereich gehört bei sämtlichen qualitativ hochwertigen Brillengläsern zum Stand der Technik.

Aus der US 9,291,746 B2 ist Brillenglas der eingangs genannten Art bekannt. Um die Augen zu schützen wird eine Antireflex-Beschichtung mit entspiegelnder Wirkung über den gesamten Spektralbereich von UV-B- bis in den IR-A-Bereich bereitgestellt. Der Schutz des Auges wird dadurch erreicht, dass von hinten einfallendes Licht nicht in das Auge des Brillenträgers zurückreflektiert wird, sondern dank der Entspiegelung bzw. Antireflex-Beschichtung durch die Brille hindurchtreten kann. Sämtliche gezeigten Ausführungsformen weisen dabei bei einem Einfallswinkel von 0° eine geringere Reflektivität auf als bei einem größeren Einfallswinkel von 30° oder 45°.

Es besteht jedoch weiterhin das Problem, dass von vorne einfallende Strahlung in das Auge eindringen kann. Durch die entspiegelnde Wirkung wird die Strahlungsmenge hierbei sogar noch erhöht.

Aus der US 2015/0146161 A1 ist ein Brillenglas der eingangs genannten Art bekannt mit einer Beschichtung, welche im infraroten Spektralbereich als Infrarotspiegel wirkt und von vorne einfallende Infrarotstrahlung effektiv mindert. Dadurch können die Augen vor von vorne einfallender Strahlung geschützt werden.

Vor diesem Hintergrund ist es eine Aufgabe der vorliegenden Erfindung, ein Brillenglas bereitzustellen, welches eine verbesserte Schutzwirkung ermöglicht.

Gemäß einem ersten Aspekt der Erfindung wird daher vorgeschlagen, ein Brillenglas bereitzustellen mit einem Linsensubstrat und mit einer auf das Linsensubstrat aufgebrachten Beschichtung, wobei die Beschichtung (22) für nahinfrarotes Licht einer ersten Wellenlänge λ_{NIR}, welches unter einem Einfallswinkel von 0° auf die Beschichtung trifft, eine erste Reflektivität von wenigstens 20% aufweist, dadurch gekennzeichnet, dass die Beschichtung für nahinfrarotes Licht der ersten Wellenlänge λ_{NIR}, welches unter einem Einfallswinkel von 35° auf die Beschichtung auftrifft, eine zweite Reflektivität aufweist, die gegenüber der ersten Reflektivität absolut um wenigstens 10% reduziert ist.

Die zunehmende Verwendung von IR-Kameras, denen IR-Strahler für eine dezente Ausleuchtung bereitgestellt werden, sorgt unter anderem im Straßenverkehr für eine ansteigende Exposition der Menschen gegenüber relativ starken IR-Strahlern. Insbesondere nachts, wenn die Sicht im sichtbaren Spektralbereich von 380 nm bis 780 nm zunehmend eingeschränkt ist, helfen infrarotbasierte Lichtsysteme bei der Orientierung. Derartige Systeme werden auch als Nachtsicht-Assistenten oder Nachtsichtgeräte bezeichnet. Ein Vorteil von Nachtsicht-Assistenten besteht darin, dass mittels eines Infrarotscheinwerfers ohne eine wahrgenommene Blendung der anderen Verkehrsteilnehmer ein großes Sichtfeld ausgeleuchtet werden kann.

Bei Dunkelheit oder schwacher Beleuchtung während der Dämmerung sind die Pupillen allerdings weit geöffnet, sodass IR-Strahlung von mit Nachtsichttechnik ausgestatteten Fahrzeugen direkt auf die Netzhaut fallen kann. Zu beachten ist hierbei, dass Infrarotstrahlung den Schutzreflex des Auges, die Pupille zu verkleinern oder das Lid zu schließen, nicht aktiviert. Eine Gefährdung der Augen im Rahmen dieser Umweltbedingungen kann nicht ausgeschlossen werden. Da übliche Brillenglasmaterialien insbesondere in einem Bereich von 800 nm bis 1.500 nm eine geringe Absorption aufweisen, ist eine Schutzwirkung mit konventionellen Brillengläsern nicht gegeben.

Im Straßenverkehr können im Wesentlichen zwei Szenarien mit erhöhter Infrarotexposition auftreten: (a) eine rückseitige Reflexion von schräg von hinten einfallender Infrarotstrahlung, wie diese beispielsweise durch ein in gleicher Richtung leicht nach hinten versetzt fahrendes Fahrzeug mit Infrarot-Nachtsichtassistenz auf einer Parallelfahrbahn auftreten könnte und (b) Schutz vor von vorne einfallender Infrarotstrahlung, wie diese bei einem entgegenkommenden Fahrzeug mit Infrarot-Nachtsichtassistenz auftreten könnte.

Die eingangs genannten Druckschriften US 9,291,746 B2 und US 2015/0146161 A1 lösen jeweils für sich genommen die Teilprobleme (a) oder (b). Eine Kombination der Lehren der beiden Druckschriften mit einer IR-Antireflexbeschichtung auf der Rückseite und einem IR-Spiegel auf der Vorderseite des Brillenglases würde jedoch nicht zu dem gewünschten Ergebnis einer ausreichenden Schutzwirkung in beiden Szenarien führen. Indem die spiegelnde Wirkung im infraroten Spektralbereich nicht nur bei von vorne sondern auch von hinten einfallender Strahlung zu tragen käme, würde zwar der Rückreflex an der Rückfläche des Brillenglases vermindert werden, jedoch durch den dielektrischen Spiegel auf der Vorderfläche dieser Effekt zunichte gemacht werden und die Strahlung dennoch in das Auge des Nutzers gelangen.

Erfindungsgemäß wird daher vorgeschlagen, eine Beschichtung bereitzustellen, welche für nahinfrarotes Licht einer ersten Wellenlänge λ_{NIR}, welches unter einem Einfallswinkel von 0° auf die Beschichtung trifft, eine erste Reflektivität von wenigstens 20% aufweist und ferner für nahinfrarotes Licht der ersten Wellenlänge λ_{NIR}, welches unter einem Einfallswinkel von 35° auf die Beschichtung auftrifft, eine zweite Reflektivität aufweist, die gegenüber der ersten Reflektivität um wenigstens 10% reduziert ist. Vorzugsweise kann damit eine verbesserte Schutzwirkung vor Infrarotstrahlern im Automobilbereich bzw. Straßenverkehr erreicht werden.

Durch die vorgeschlagene Winkelabhängigkeit bei einer Wellenlänge λ_{NIR} im Nahinfrarotbereich wird somit ein von vorne einfallender Lichtanteil stärker reduziert, wohingegen ein schräg von hinten einfallender Lichtanteil durch die verminderter Reflektivität passieren kann. Die Reflektivität von wenigstens 20% bei einem Einfallswinkel von 0° macht deutlich, dass es sich im Gegensatz zur US 9,291,746 B2 insbesondere nicht um eine Antireflexbeschichtung oder Entspiegelung handelt. Vorzugsweise beträgt die Reflektivität 30%, 40%, 50%, 60% oder auch 70% oder mehr. Vorzugsweise kann auch eine noch größere Differenz wischen der Reflektivität bei dem Einfallswinkel von 35° und bei 0° vorgesehen sein.

Aufgrund der Trageposition von Brillen fällt die Infrarotstrahlung zusammen mit dem sichtbaren Licht bei dem Blick in die Strahlungsquelle (dem gefährlichsten Moment) in einem Winkel von rund 0° (üblicherweise ±15°) auf das Brillenglas, sodass die spiegelnde Wirkung des Brillenglases bei 0° maximiert wird. Für die von hinten kommende Strahlung ist der Winkelbereich rund um 0° demgegenüber weniger wichtig, da hier im Wesentlichen lediglich die eigene menschliche Wärmestrahlung reflektiert wird. Das Gefährdungspotential der eigenen Wärmestrahlung kann jedoch als klein eingeschätzt werden. Entscheidend für die Rückseite ist demgegenüber der Winkelbereich zwischen 35° und 60° des einfallenden Lichts zur Senkrechten auf der Glasfläche, bei dem die Strahlung durch Totalreflexion in das menschliche Auge reflektiert werden kann.

Gemäß einem Aspekt der Erfindung kann ferner eine Wechselwirkung zwischen der Reflektivität bei dem Einfallswinkel von 0° und der Reflektivität bei dem Einfallwinkel von 35° berücksichtigt werden. Eine Erhöhung der Reflektivität bei dem Einfallswinkel von 0° kann auch zu einer Erhöhung der Reflektivität bei dem Einfallswinkel von 35° führen. Indem eine nicht zu hohe Reflektivität bei dem Einfallswinkel von 0°, beispielsweise von wenigstens 20%, jedoch nicht mehr als 70%, vorzugsweise nicht mehr als 60%, 50% oder 40% bereitgestellt wird, ist es möglich, bei einem Schichtaufbau mit begrenzter Komplexität eine hinreichend reduzierte Reflektivität bzw. hinreichend niedrige Reflektivität bei der Wellenlänge λ_{NIR} im Nahinfrarotbereich für schräg von hinten einfallende Strahlung zu erreichen.

In dem Anwendungsfall der Nachtassistenzsysteme im Kfz-Bereich ist der Nutzer bei moderatem Verkehrsaufkommen der Infrarotstrahlung von entgegenkommenden Fahrzeugen lediglich für relativ kurze Zeitintervalle ausgesetzt, da diese das Fahrzeug des Nutzers in entgegengesetzter Richtung passieren. Demgegenüber kann bei schräg von hinten einfallender Infrarotstrahlung eine Exposition über einen andauernden Zeitraum bestehen, beispielsweise wenn ein Fahrzeug mit ähnlicher Geschwindigkeit leicht versetzt auf einer parallelen Fahrbahn fährt. Insofern kann bei einem Einfallswinkel von 0° eine Reflektivität von wenigstens 20% ausreichend sein. Dadurch kann mit einem Schichtaufbau mit begrenzter Komplexität eine hinreichend reduzierte Reflektivität bzw. hinreichend niedrige Reflektivität bei der Wellenlänge λ_{NIR} im Nahinfrarotbereich für schräg von hinten einfallende Strahlung erreicht werden.

Ferner kann das vorgeschlagene Brillenglas auch bei von vorne sowie schräg von hinten einfallender Sonnenstrahlung eine verbesserte Schutzwirkung bieten. Durch die spiegelnde Wirkung bei einem Einfallswinkel von 0° können von vorne einfallende Strahlen, wie beispielsweise durch Reflektion an Oberflächen, beispielsweise Reflektionen an einer Wasseroberfläche, reduziert werden, wobei gleichzeitig durch die reduzierte Reflektivität bei einem Einfallswinkel von 35° schräg von hinten einfallende Strahlung das Brillenglas zu einem größeren Anteil passiert und somit nicht ins Auge zurückreflektiert wird. Ein möglicher Anwendungsfall ist hierbei das Lesen eines Buches im Freien, insbesondere am Strand.

Das Brillenglas weist vorzugsweise eine von Null verschiedene optische Wirkung auf. Vorzugsweise weist das Linsensubstrat einen UV-Absorber auf.

Gemäß einem zweiten Aspekt der vorliegenden Erfindung wird ein computerimplementiertes Verfahren zur Auslegung eines Brillenglases mit einem Linsensubstrat und mit einer auf das Linsensubstrat aufgebrachten Beschichtung mit einer die Beschichtung bildenden Schichtfolge vorgeschlagen, wobei das Verfahren folgenden Schritt aufweist:
- Bestimmen der Schichtfolge, wobei das Bestimmen der Schichtfolge mit der Maßgabe erfolgt, dass die Beschichtung für nahinfrarotes Licht einer ersten Wellenlänge λ_{NIR}, welches unter einem Einfallswinkel von 0° auf die Beschichtung trifft, eine erste Reflektivität von wenigstens 20% aufweist und für nahinfrarotes Licht der ersten Wellenlänge λ_{NIR}, welches unter einem Einfallswinkel von 35° auf die Beschichtung auftrifft, eine zweite Reflektivität aufweist, die gegenüber der ersten Reflektivität um wenigstens 10% reduziert ist.

Gemäß einem dritten Aspekt der vorliegenden Erfindung wird Verfahren zum Herstellen eines Brillenglases mit einem Linsensubstrat und mit einer auf das Linsensubstrat aufgebrachten Beschichtung vorgeschlagen, wobei das Verfahren folgende Schritte aufweist:
- Bereitstellen eines Linsensubstrats;
- Aufbringen einer die Beschichtung bildenden Schichtfolge auf das Linsensubstrat, wobei das Aufbringen der Beschichtung mit der Maßgabe erfolgt, dass die Beschichtung für nahinfrarotes Licht einer ersten Wellenlänge λ_{NIR}, welches unter einem Einfallswinkel von 0° auf die Beschichtung trifft, eine erste Reflektivität von wenigstens 20% aufweist und für nahinfrarotes Licht der ersten Wellenlänge λ_{NIR}, welches unter einem Einfallswinkel von 35° auf die Beschichtung auftrifft, eine zweite Reflektivität aufweist, die gegenüber der ersten Reflektivität um wenigstens 10% reduziert ist.

Gemäß einem vierten Aspekt der vorliegenden Erfindung wird eine Brille vorgeschlagen mit einer Fassung und einem ersten und einem zweiten Brillenglas gemäß dem ersten Aspekt.

Falls nicht anderweitig spezifiziert, sollen die hierin verwendeten Begriffe im Sinne der Norm DIN EN ISO 13666:2012 des Deutschen Instituts für Normung e.V. verstanden werden.

Der Einfallswinkel bezieht sich auf einen Winkel gegenüber der Oberflächennormalen bzw. Senkrechten zur Oberfläche des Brillenglases. Der Einfallswinkel kann insbesondere an einem Scheitelpunkt des Brillenglases gemäß Abschnitt 4.9 der Norm DIN EN ISO 13666:2012 bestimmt werden.

Der Begriff sichtbares Licht, sichtbare Strahlung bzw. ein sichtbarer Wellenlängenbereich betrifft gemäß Abschnitt 4.2 der Norm DIN EN ISO 13666:2012 optische Strahlung, die unmittelbar eine Lichtempfindung beim Menschen hervorzurufen vermag. Sichtbare Strahlung kann sich auf einen Wellenlängenbereich von 400 nm bis 780 nm beziehen. Im Rahmen dieser Offenbarung kann sich sichtbare Strahlung jedoch vorzugsweise auf einen Wellenlängenbereich von 400 nm bzw. 460 nm bis 700 nm beziehen. Damit wird insbesondere das Sensitivitätsmaximum des Auges abgedeckt und gleichzeitig die Designflexibilität für die Auslegung der Filtereigenschaften und Flankensteilheit erhöht.

Unter ultravioletter Strahlung wird gemäß Abschnitt 4.3 der Norm DIN EN ISO 13666:2012 optische Strahlung verstanden, deren Wellenlängen kleiner sind als die der sichtbaren Strahlung. Der Bereich der ultravioletten Strahlung zwischen 100 nm und 400 nm wird gewöhnlich unterteilt in: UV-A (315 nm bis 400 nm), UV-B (280 nm bis 315 nm) und UV-C (100 nm bis 280 nm). Alternativ kann als Obergrenzwert für UV-A 380 nm verwendet werden. Der Spektralbereich für UV-C ist effektiv 200 nm bis 280 nm, da die Atmosphäre Strahlung von Wellenlängen kürzer als 200 nm hinreichend absorbiert.

Unter dem Begriff Infrarotstrahlung ist gemäß Abschnitt 4.3 der Norm DIN EN ISO 13666:2012 optische Strahlung, deren Wellenlängen größer sind als die der sichtbaren Strahlung zu verstehen. Der Bereich von 780 nm bis 3 µm wird auch als Nahinfrarotbereich bezeichnet. Hierbei wird zwischen den IR-A (780 nm bis 1.400 nm) und IR-B (1,4 µm bis 3 µm) unterschieden. Auf Höhe des Meeresspiegels erstreckt sich das zu berücksichtigende infrarote Spektrum bis etwa 2 µm. Ferner bieten konventionelle Brillenglasmaterialien für Wellenlängen größer als etwa 1,7 µm bis 2 µm aufgrund ihrer Materialeigenschaften bereits eine hinreichende Absorption von infraroter Strahlung.

Der Begriff Vorderfläche oder objektseitige Fläche bezeichnet gemäß Abschnitt 5.8 der Norm DIN EN ISO 13666:2012 die Fläche eines Brillenglases, die bestimmungsgemäß in der Brille vom Auge abgewandt liegt. Begriff Rückfläche oder augenseitige Fläche bezeichnet gemäß Abschnitt 5.19 der Norm DIN EN ISO 13666:2012 die Fläche eines Brillenglases, die bestimmungsgemäß in der Brille dem Auge zugewandt liegt. Die Begriffe Vorderfläche bzw. Rückfläche werden hierbei entsprechend für das Linsensubstrat verwendet.

Der Begriff Brillenglas bezeichnet im Rahmen der vorliegenden Offenbarung insbesondere ein beschichtetes Brillenglas gemäß Abschnitt 8.1.13 der Norm DIN EN ISO 13666:2012, also ein Brillenglas, auf das eine oder mehrere Oberflächenbeschichtungen aufgebracht wurden, insbesondere um eine oder mehrere seiner Eigenschaften zu ändern. Die hierin beschriebenen Brillengläser können insbesondere in folgenden Bereichen vorteilhaft eingesetzt werden Brillen (mit und ohne Korrektur), Sonnenbrillen, Skibrillen, Arbeitsplatzbrillen, sowie Brillen in Verbindung mit kopfgetragenen Anzeigeeinrichtungen (head-mounted displays).

Der Begriff Brillenglas kann im Rahmen der vorliegenden Offenbarung ferner Brillenglas-Halbfabrikate umfassen, insbesondere ein Brillenglasblank oder Brillenglas-Halbfertigprodukt gemäß Abschnitt 8.4.2 der Norm DIN EN ISO 13666:2012, also einen Linsenrohling oder Blank mit nur einer optischen fertig bearbeiteten Fläche. Der Begriff Linsensubstrat bezieht sich hingegen auf ein Brillenglas (einschließlich Halbfabrikate) ohne erfindungsgemäße Beschichtung.

Der Begriff spektraler Reflexionsgrad, Reflexionsgrad oder Reflektivität bezeichnet entsprechend Abschnitt 15.1 der Norm DIN EN ISO 13666:2012 das Verhältnis der spektralen Strahlungsleistung, die von dem jeweiligen Material bzw. der Oberfläche oder Beschichtung reflektiert wird, zur auftreffenden Strahlungsleistung für eine bestimmte Wellenlänge (λ). Im vorliegenden Fall bezieht sich die Reflektivität auf die Reflektivität der gesamten Beschichtung mit ihren mehreren hoch- und niedrigbrechenden Schichten und nicht auf die Reflektivität einer einzelnen Schicht.

Der Begriff spektraler Transmissionsgrad oder Transmission bezeichnet gemäß Abschnitt 15.2 der Norm DIN EN ISO 13666:2012 das Verhältnis der spektralen Strahlungsleistung, die von dem jeweiligen Material durchgelassen wird, zur auftreffenden Strahlungsleistung für eine bestimmte Wellenlänge (λ).

Der Begriff Lichttransmissionsgrad bezeichnet gemäß Abschnitt 15.4 der Norm DIN EN ISO 13666:2012 das Verhältnis des von dem Brillenglas oder Filter bzw. hier von der Beschichtung durchgelassenen Lichtstroms zum auftreffenden Lichtstrom. Er erfolgt hierbei eine Gewichtung mit der Empfindlichkeitsfunktion des menschlichen Auges für Tagsehen und der spektralen Strahlungsverteilung der CIE-Normlichtart D65. Abweichend von der oben genannten Norm kann hierbei ein Wellenlängenbereich von 400 nm bzw. 460 nm bis 700 nm bzw. 780 nm berücksichtigt werden.

Es versteht sich, dass noch weitere Fertigungsschritte vorgenommen werden können, wie beispielsweise der Auftrag zusätzlicher Schichten der Beschichtung, beispielsweise einer Schutzschicht gegen Verkratzen oder das Aufbringen einer leitfähigen antistatischen Schicht, um eine antistatische Wirkung zu erzielen. Zusätzliche Schichten können insbesondere auch innerhalb einer Schichtfolge der in der nachfolgenden Beschreibung angegebenen Ausführungsformen eingefügt werden, um zusätzliche Funktionalitäten zu erzielen. Beispielweise kann das Einfügen einer ca. 3nm dünnen ITO-Schicht innerhalb einer in der nachfolgenden Beschreibung angegebenen Schichtfolge antistatische Wirkung erzielen, ohne wesentlichen Einfluss auf die spektrale Reflektivität zu nehmen. Dabei kann es von Vorteil sein, die ITO-Schicht nicht als Abschlussschicht sondern innerhalb der Schichtfolge einzufügen. Es versteht sich, dass eine Wechselwirkung zwischen den Schichten der Beschichtung besteht, sodass keine Zergliederung vorgenommen werden kann, sondern bezüglich der optischen Eigenschaften, insbesondere bezüglich der winkelabhängigen Reflektivität, auf die Gesamtwirkung der Beschichtung abzustellen ist.

Der Begriff Beschichtung kann sich hierbei insbesondere auf eine dielektrische Beschichtung mit einer Schichtfolge hochbrechender und niedrigbrechender Schichten beziehen. Ein derartiger dielektrischer Spiegel bzw. Filter kann auch als Bragg-Reflektor bezeichnet werden. Optional kann eine derartige Beschichtung auch mittelbrechende Schichten mit einem Brechungsindex, welcher zwischen dem Brechungsindizes hochbrechender und niedrigbrechender Schichten liegt, aufweisen. Eine derartige Beschichtung kann durch Vakuumbeschichtungsverfahren aufgebracht werden, beispielsweise durch Verdampfen bzw. Aufdampfen, Sputtern bzw. Kathodenzerstäubung oder chemische Gasphasenabscheidung.

Unter Maßgabe ist vorliegend eine zu erfüllende Randbedingung im Sinne einer funktionalen Merkmalsdefinition zu verstehen. Insbesondere kann es sich um eine Eigenschaft oder Randbedingung für ein iteratives Approximations- bzw. Optimierungsverfahren handeln, welche die Basis für derartige Verfahren darstellen.

In einer Ausgestaltung kann vorgesehen sein, dass die mittlere Transmission bzw. der Lichttransmissionsgrad des Brillenglases in einem sichtbaren Wellenlängenbereich von 400 nm bis 700 nm und bei einem Einfallswinkel von 0° mindestens 95%, vorzugsweise mindestens 98% beträgt. Hierbei handelt es sich um eine gewichtete Transmission im sichtbaren Bereich, welche die Augensensitivitätsfunktion berücksichtigt. Unter Transmission ist hierbei der Lichttransmissionsgrad gemäß Abschnitt 15.4 der Norm DIN EN ISO 13666:2012 zu verstehen, also das Verhältnis des vom Brillenglas durchgelassenen Lichtstroms zum auftretenden Lichtstrom im angegebenen Spektralbereich. Es können auch die Wellenlängenbereiche von 400 nm bis 780 nm, von 460 nm bis 700 nm, bzw. von 460 nm bis 780 nm berücksichtigt werden. Mit anderen Worten handelt es sich hierbei um ein für den Nutzer für sichtbares Licht durchsichtiges Brillenglas. Alternativ kann zusätzlich eine Abtönung vorgesehen sein, beispielsweise beim Einsatz als Sonnenbrille.

In einer Ausgestaltung kann die Wellenlänge λ_{NIR} im Nahinfrarot in einem Wellenlängenbereich aus der Gruppe von Wellenlängenbereichen von 780 nm bis 1.500 nm, von 800 nm bis 1.200 nm, und von 850 nm bis 1.100 nm liegen. Beispielsweise kann die Wellenlänge λ_{NIR} = 1.000 nm sein. Vorzugsweise ist die Infrarotwellenlänge auf eine vorgegebene Strahlungsquelle abgestimmt, wie beispielsweise auf ein Emissionsmaximum eines Infrarotscheinwerfers eines Nachtsichtassistenten im Automobilbereich.

In einer weiteren Ausgestaltung kann die Beschichtung über einen Wellenlängenbereich, welcher die Wellenlänge λ_{NIR} im Nahinfrarotbereich umfasst, gegenüber dem Einfallswinkel von 0° eine um wenigstens 10% reduzierte Reflektivität aufweisen. Ein Vorteil dieser Ausgestaltung ist, dass dadurch auch einer breitbandigen Strahlungsquelle Rechnung getragen werden kann. Üblicherweise handelt es sich bei Infrarotstrahlungsquellen nicht um eine monochromatische Lichtquelle, sondern um beispielsweise Infrarot-LED-Scheinwerfer mit einem breiteren Emissionsspektrum. Indem die Beschichtung dem Wellenlängenbereich Rechnung trägt, kann die Schutzwirkung über diesen Bereich sichergestellt werden.

In einer weiteren Ausgestaltung weist die Beschichtung bei einem Einfallswinkel von 0° eine Reflektivität aus einer Gruppe von Reflektivitäten von wenigstens 25%, von wenigstens 30%, von wenigstens 40% und von wenigstens 50% bei der Wellenlänge λ_{NIR} im Nahinfrarotbereich auf. Insbesondere kann die Beschichtung bei einem Einfallswinkel von 0° eine Reflektivität von wenigstens 60%, 70% oder 80% aufweisen. Es versteht sich also, dass die vorgeschlagene Beschichtung insbesondere bei der Wellenlänge λ_{NIR} eben nicht als Antireflexbeschichtung wirkt, sondern vielmehr als Beschichtung mit reflektierender Wirkung.

In einer Ausgestaltung weist die Beschichtung bei einem Einfallswinkel von 35° eine gegenüber dem Einfallswinkel von 0° um wenigstens einen Faktor aus einer Gruppe von 15%, 20%, 25% und 30% reduzierte Reflektivität bei der Wellenlänge λ_{NIR} im Nahinfrarotbereich auf. Insbesondere kann die Beschichtung bei einem Einfallswinkel von 35° eine gegenüber dem Einfallswinkel von 0° um wenigstens 40%, 50%, 60% oder 70% verminderte Reflektivität aufweisen. Dadurch wird ein größerer Unterschied zwischen der spiegelnden Wirkung für von vorne einfallende Strahlung (beispielsweise unter einem Einfallswinkel von 0°±15°) und von schräg von hinten einfallender Strahlung erreicht. Es versteht sich, dass die Reflektivität keine negativen Werte annimmt. Beispielsweise kann die Beschichtung bei einem Einfallswinkel von 0° eine Reflektivität von 50% aufweisen und einem Einfallswinkel von 35° eine Reflektivität von 25% aufweisen, also eine um absolut 25% bzw. relativ um 50% reduzierte Reflektivität bei einem Einfallswinkel von 35° gegenüber dem Einfallswinkel von 0°. Im Rahmen der vorliegenden Offenbarung bezieht sich eine Prozentzahl für die reduzierte Reflektivität auf eine absolute Reduktion der Reflektivität.

In einer Ausgestaltung weist die Beschichtung über einen Einfallswinkelbereich von 30° bis 45° eine gegenüber dem Einfallswinkel von 0° um wenigstens 10% reduzierte Reflektivität bei der Wellenlänge λ_{NIR} im Nahinfrarotbereich auf. Ein Vorteil dieser Ausgestaltung besteht darin, dass die schützende Wirkung über einen größeren Winkelbereich sichergestellt werden kann. Vorzugsweise können ein Einfallswinkelbereich und ein Wellenlängenbereich, welcher die Wellenlänge λ_{NIR} umfasst, kombiniert werden.

In einer weiteren Ausgestaltung weist das Linsensubstrat eine Vorderfläche und eine Rückflache auf und die Beschichtung ist auf der Vorderfläche des Linsensubstrats aufgebracht. Ein Vorteil dieser Ausgestaltung besteht darin, dass die Vorderfläche in der Fertigung bereits mit der Beschichtung versehen werden kann. Insbesondere kann die Vorderfläche beschichtet werden bevor die Rückfläche, beispielsweise mit einem Freiformgenerator, fertig bearbeitet wird. Vorzugsweise kann demnach ein Brillengas-Halbfertigprodukt und/oder Brillenglasblank mit einer bereits fertig bearbeiteten Vorderfläche bereitgestellt werden.

In einer Ausgestaltung kann das Linsensubstrat ferner einen IR-Absorber aufweisen. Ein Vorteil dieser Ausgestaltung besteht darin, dass die Infrarotstrahlung weiter reduziert werden kann. Die Wirkung eines IR-Absorbers (Infrarot-Absorbers) kann besonders vorteilhaft sein, wenn die Beschichtung auf der Vorderseite aufgebracht ist. Eine dielektrische Beschichtung wirkt naturgemäß in beide Richtungen gleich. Ein bei von hinten eintretendem Licht verbleibender Strahlungsanteil, welcher die Vorderfläche erreicht und dort von der Beschichtung der Vorderfläche zurückreflektiert wird, erfährt dabei einen zweimaligen Durchgang durch das Substrat mit IR-Absorber (Hin- und Rückweg), sodass die Infrarotstrahlung doppelt abgeschwächt wird.

Darüber hinaus kann sich bei der Kombination von IR-Absorber und Beschichtung auf der Vorderfläche des Linsensubstrats ein Synergieeffekt ergeben. Durch die zumindest teilweise reflektierende Wirkung der Beschichtung auf der Vorderseite kann die Lebensdauer des Substrats mit IR-Absorber erhöht werden, da weniger Infrarotstrahlung auf den IR-Absorber einwirkt. Dadurch kann sich über die Lebensdauer eine verbesserte Transmission auch im sichtbaren Bereich ergeben, da Alterungserscheinungen von IR-Absorbern einen Einfluss im sichtbaren Spektralbereich bewirken können.

IR-Absorber, beispielsweise in Form von Infrarotlicht absorbierenden Farbstoffen, können mit verschiedenen Verfahren eingebracht werden. Beispielsweise ist eine Zumischung zu einem Monomergemisch des Substrats möglich, sodass sie zusammen mit beispielsweise UV-Absorbern zugesetzt werden können und mit ausgehärtet bzw. zusammen mit dem insbesondere thermoplastischen Polymer per Spritzguss verarbeitet werden können. Hierbei kann es sich um ein Polymerprodukt handeln, in dem die Farbstoffe homogen verteilt sind oder ein Polymerprodukt, in dem sich der oder die Farbstoffe in einer Schicht an der Oberfläche mit beispielsweise 500 µm oder weniger befinden.

Alternativ kann eine Zumischung des IR-Absorbers zu einem Lack, der auf das Substrat aufgebracht wird (beispielsweise UV oder thermisch härtend) vorgesehen sein. Vorzugsweise kann dieser auch gleichzeitig als Primer oder Hartbeschichtung fungieren. Dabei kann eine höhere Absorberkonzentration vorgesehen sein, um die gleiche Wirkung wie bei Zumischung zum Substratmaterial zu erreichen, beispielsweise 0,02 bis 4 Massenprozent, vorzugsweise zwischen 0,1 und 1 Massenprozent, vorzugsweise zwischen 0,2 und 0,75 Massenprozent. Ein optionale Primer bzw. eine Primerschicht kann auf das Linsensubstrat aufgebracht werden, damit eine funktionale Beschichtung besser anhaftet. Eine optionale Hartbeschichtung (auch als HardCoat bezeichnet), kann das Brillenglas vor Verkratzen schützen.

Des Weiteren kann ein IR-Absorber durch Diffusion in das Substratmaterial oder die Beschichtung, insbesondere die Hartbeschichtung, eingebracht werden, analog zum Färben von Gläsern bzw. via Thermotransfer oder Imbibing. Hierbei sind vorzugsweise Farbstoffe mit hoher Quantenausbeute einzusetzen, damit die üblicherweise niedrigen Schichtdicken der Beschichtung eine signifikante Reduktion der Transmission bewirken können. IR-Absorber können unter anderem aus der Substanzklasse der (Quater-)Rylene, der Phenylendiamine oder der Metallkomplexe mit passenden Charge-Transfer-Übergängen entnommen werden. Beispiele sind (Bis(4,4'-dimethoxydithiobenzil)nickel (CAS 38465-55-3), Bis(4-dimethylaminodithiobenzil)nickel) (CAS 38951-97-2); N,N,N',N'-Tetrakis(4-dibutylaminophenyl)-p-phenylenediaminium hexafluorophosphate (CAS 152340-26-6), Anthra[9",1",2":6,5,10;10",5",6":6',5',10'] dianthra[2,1,9-def:2',1',9'-d'e'f] diisoquinoline-1, 3,12,14(2H,13H) (CAS 165550-64-1), Anthra[9",1",2":6,5,10;10",5",6":6',5',10']dianthra[2,1,9-def:2',1',9'-d'e'f']diisoquinoline-1,3,12,14(2H,13H)-tetrone, 2,13-bis[2,6-bis(1-methylethyl)phenyl]-5,10,16,21-tetrakis[4-(1,1,3,3-tetramethylbutyl)phenoxy] (CAS 333304-54-4) und dergleichen.

In einer Ausgestaltung kann ferner eine Beschichtung gemäß der vorliegenden Offenbarung auf der Rückfläche des Linsensubstrats aufgebracht sein. Beispielsweise kann die gleiche Beschichtung auf der Vorderfläche und auf der Rückfläche vorgesehen sein. Alternativ kann für die Rückfläche jedoch eine andere Ausgestaltung der Beschichtung gemäß der vorliegenden Offenbarung vorgesehen sein. Ein Vorteil davon, eine derartige Beschichtung sowohl auf der Vorder- als auch auf der Rückfläche vorzusehen, besteht darin, dass die IR-Transmission noch deutlicher reduziert und somit eine verbesserte Schutzwirkung erreicht werden kann. Alternativ oder zusätzlich, kann ein einfacherer Schichtaufbau ausreichend sein, um eine gewünschte Wirkung zu erreichen. Hierdurch können die Beschichtungen kostengünstiger hergestellt werden. Vorzugsweise wird eine Beschichtung auf der Vorder- und Rückfläche mit einem IR-Absorber im Linsensubstrat kombiniert. Die reduzierte Reflektivität für schräg von hinten einfallende Strahlung durch die rückseitige Beschichtung kann zusammen mit dem IR-Absorber im Linsensubstrat eine IR-Strahlenbelastung des Auges abschwächen und die Schutzwirkung weiter verbessern.

In einer Ausgestaltung weist das Linsensubstrat eine Vorderfläche und eine Rückfläche auf und die Rückfläche weist eine Antireflexbeschichtung für wenigstens einen Bereich aus einer Gruppe von sichtbarem Licht, IR-Licht und UV-Licht auf. Die eingangs vorgeschlagene Beschichtung kann dabei auf der Vorderfläche vorgesehen sein. Durch Einsatz einer derartigen Antireflexbeschichtung, wie beispielsweise aus der US 9,291,746 B2 bekannt, kann eine zusätzliche Schutzfunktion erreicht werden. Insbesondere kann eine Infrarot-Antireflexbeschichtung (IR-AR) auf der Vorder- und/oder Rückfläche vorgesehen sein. Eine vorder- und rückflächige Beschichtung kann insbesondere in Kombination mit einem IR-Absorber im Linsensubstrat eine vorteilhafte Schutzwirkung entfalten. Hierbei kann es sich beispielsweise um eine keramische oder hybrid (z.B. organisch-anorganische Hybridschichten auf Basis von Sol-Gel-Prozessen) Beschichtung handeln, die vorzugsweise neben einer Wirkung als Entspiegelungsschicht im sichtbaren Bereich auch im infraroten Spektrum reduzierend auf die Reflektion wirkt.

In einer weiteren Ausgestaltung weist das Linsensubstrat eine Vorderfläche und eine Rückfläche auf und die Vorderfläche weist eine reflektierende Beschichtung für wenigstens einen Bereich aus einer Gruppe von UV-Licht und kurzwelligem blauen Licht auf. Mit anderen Worten weist eine Beschichtung auf der Vorderseite eine reflektierende Wirkung für UV-Licht und/oder kurzwelliges blaues Licht auf. Bei der Beschichtung kann es sich um die Beschichtung gemäß dem ersten Aspekt handeln, welche zusätzlich eine entsprechende reflektierende Wirkung bietet. Ein Vorteil dieser Ausgestaltung besteht in einer weiter verbesserten Schutzwirkung in weiteren Spektralbereichen. Es versteht sich, dass alternativ oder zusätzlich zur Vorderfläche auch die Beschichtung auf der Rückfläche mit derartigen Eigenschaften ausgestaltet sein kann. Die Schutzwirkung für kurzwelliges blaues Licht wird auch als BlueCut bezeichnet. Unter BlueCut ist vorzugsweise eine Antireflexbeschichtung (keramisch oder Hybrid) zu verstehen, welche insbesondere mit hohem Wirkungsgrad eine erhöhte Reflektivität für kurzwelliges blaues Licht am Rande des UV-Bereichs aufweist, beispielsweise von 400 nm bis 460 nm (high-energy-visible (HEV)). In einem sichtbaren Wellenlängenbereich von 460 nm bis 700 nm kann weiterhin eine Transmission des Brillenglases von mindestens 95%, vorzugsweise mindestens von 98% vorgesehen sein.

In einer weiteren Ausgestaltung weist die Beschichtung hochbrechende, mittelbrechende und niedrigbrechende Materialien auf. Ein Vorteil dieser Ausgestaltung besteht darin, dass der Wirkung des Schichtsystems der Beschichtung durch Hinzufügen einer dritten Komponente mit mittlerem Brechungsindex (zwischen dem hochbrechenden und dem niedrigbrechenden liegend) mehr Flexibilität verliehen wird. Vorzugsweise kann die Anzahl der für eine gewünschte Wirkung notwendigen Schichten reduziert werden. Als hochbrechendes Material kann ein Material verwendet werden, dessen Brechungsindex über dem des Substratmaterials liegt, wie beispielsweise TiO2. Als hochbrechende Materialien oder sogenannte High-Index-Materialien können beispielsweise Metalloxide eingesetzt werden aus einer Gruppe von Oxiden von Zr, Ti, Al, Y, Ta, Nd, La, Nb und PrTi oder Kombinationen davon. Als niedrigbrechendes Material kann ein Material verwendet werden, dessen Brechungsindex unterhalb dem des Substratmaterials liegt. Beispielsweise kann hierfür SiO₂ verwendet werden. Alternativ können beispielsweise auch Mischungen von SiO₂ mit Aluminium verwendet werden. Als beispielhaftes Material mit mittlerem Brechungsindex kann ZrO₂ eingesetzt werden. Beispielsweise kann ein hochbrechendes Material einen Brechungsindex von n > 2,0, ein mittelbrechendes Material einen Brechungsindex von n = 1,5 bis n = 2,0, und ein niedrigbrechendes Material einen Brechungsindex von n < 1,5. Es versteht sich, dass je nach Anwendung und verwendetem Linsensubstratmaterial auch abweichende Bereiche verwendet werden können, beispielsweise relative Angaben der Materialien zueinander oder bezogen auf einen Brechungsindex des Linsensubstratmaterials.

In einer Ausgestaltung kann die Beschichtung folgende Schichtfolge aufweisen: eine erste Schicht TiO₂, gefolgt von einer ersten Schicht SiO₂, gefolgt von einer zweiten Schicht TiO₂, gefolgt von einer zweiten Schicht SiO₂, gefolgt von einer dritten Schicht TiO₂, gefolgt von einer dritten Schicht SiO₂, gefolgt von einer ersten Schicht ZrO₂, gefolgt von einer vierten Schicht TiO₂, gefolgt von einer zweiten Schicht ZrO₂, gefolgt von einer fünften Schicht TiO₂. Zwischen dem Linsensubstrat und der ersten Schicht TiO₂ kann eine Hartlackschicht (HardCoat) vorgesehen sein. Optional können weitere Abschlussschichten vorgesehen sein.

In einer Ausführungsform kann die Beschichtung eine hochbrechende Abschlussschicht aufweisen. Ein Vorteil dieser Ausgestaltung besteht darin, dass durch den großen Indexunterschied zwischen der hochbrechenden Abschlussschicht und der umgebenden Luft eine vorteilhafte spiegelnde Wirkung auch in Infrarotbereich erreicht werden kann.

In einer Ausgestaltung weist die Beschichtung ferner eine leitfähige Schicht auf. Beispielsweise kann hierfür ein transparentes leitfähiges Oxid wie Indium-Zinn-Oxid «In₂O₃)_{0.9} (SnO₂)_{0.1}; ITO), Fluor-Zinn-Oxid (SnO₂:F; FTO), Aluminium-Zink-Oxid (ZnO:Al; AZO), oder Antimon-Zinn-Oxid (SnO₂:Sb; ATO) zum Einsatz kommen. Ein Vorteil dieser Ausgestaltung besteht darin, dass eine statische Aufladung vermieden werden kann. Dadurch kann die Reinigung des Brillenglases verbessert werden. Darüber hinaus können zusätzliche Schichten eingebaut werden, um beispielsweise die mechanische Stabilität des Schichtsystems zu verbessern. Hierzu können Schichten mit einer Dicke ≥100 nm zum Einsatz kommen.

In einer weiteren Ausgestaltung weist die Beschichtung wenigstens fünf, insbesondere wenigstens sechs, insbesondere wenigstens sieben Schichten, insbesondere wenigstens acht Schichten, insbesondere wenigstens neun, insbesondere wenigstens zehn Schichten, auf. Ein Vorteil dieser Ausgestaltung besteht darin, dass eine wohldefinierte Transmissionswirkung bzw. Reflektionswirkung mit der gewünschten Winkelabhängigkeit erreicht werden kann.

In einer Ausgestaltung des Verfahrens gemäß dem zweiten Aspekt der Erfindung als computerimplementiertes Verfahren kann das Bestimmen der Schichtfolge folgende Schritte umfassen:
a) Bereitstellen von eine erste Schichtfolge einer Beschichtung beschreibenden Parametern;
b) Bereitstellen eines die erste Reflektivität repräsentierenden ersten Grenzwerts von wenigstens 20%;
c) Bestimmen der Reflektivität der Beschichtung für nahinfrarotes Licht der ersten Wellenlänge λ_{NIR}, welches unter dem Einfallswinkel von 0° auf die Beschichtung trifft;
d) Vergleichen der in Schritt c) bestimmte Reflektivität mit dem ersten Grenzwert;
e1) für den Fall, dass bei dem in Schritt d) durchgeführten Vergleichen kein Überschreiten des ersten Grenzwerts durch die in Schritt c) bestimmte Reflektivität festgestellt wird:
   f1) Ändern der die erste Schichtfolge beschreibenden Parameter und
   g1) Durchführen der Schritte c) bis d);
e2) für den Fall, dass in dem in Schritt d) durchgeführten Vergleichen ein Überschreiten des ersten Grenzwerts festgestellt wird:
   f2) Bestimmen der Reflektivität der Beschichtung für nahinfrarotes Licht der ersten Wellenlänge λ_{NIR}, welches unter dem Einfallswinkel von 35° auf die Beschichtung trifft
   g2) Vergleichen der in Schritt f2) bestimmten Reflektivität mit der in Schritt c) bestimmten Reflektivität
   h2.1) für den Fall, dass bei dem in Schritt g2) durchgeführten Vergleichen kein Unterschreiten der in Schritt c) bestimmten Reflektivität durch die in Schritt f2) bestimmte Reflektivität um mehr als 10% festgestellt wird:
      i2.1) Ändern der die erste Schichtfolge beschreibenden Parameter und
      j2.1) Durchführen der Schritte c) bis d);
   h2.2) für den Fall, dass bei dem in Schritt g2) durchgeführten Vergleichen ein Unterschreiten der in Schritt c) bestimmten Reflektivität durch die in Schritt f2) bestimmte Reflektivität um mehr als 10% festgestellt wird
      k2.2) Ausgeben der die erste Schichtfolge beschreibenden Parameter als die die Schichtfolge der Beschichtung beschreibenden Parameter.
   Das Bestimmen der Schichtfolge kann somit vorzugsweise als iteratives Verfahren, insbesondere als iteratives Approximations- bzw. Optimierungsverfahren durchgeführt werden. Hierzu können kommerziell erhältliche Programme eingesetzt werden, beispielsweise die Software von OptiLayer GmbH, Garching, Deutschland, welche in Europa von Langbein Thelen Consulting in Heidelberg, Deutschland, vertrieben wird. Weitere Vertriebskanäle sind unter http://www.optilayer.com/distributors zu finden.

In einer Ausgestaltung des Verfahrens gemäß dem zweiten Aspekt der Erfindung als computerimplementiertes Verfahren kann das Bestimmen der Schichtfolge folgende Schritte umfassen:
a) Bereitstellen von eine erste Schichtfolge einer Beschichtung beschreibenden Parametern;
b) Bereitstellen eines die erste Reflektivität repräsentierenden ersten Grenzwerts von wenigstens 20%;
c) Bestimmen der Reflektivität der Beschichtung für nahinfrarotes Licht der ersten Wellenlänge λ_{NIR}, welches unter dem Einfallswinkel von 0° auf die Beschichtung trifft;
d) Bestimmen der Reflektivität der Beschichtung für nahinfrarotes Licht der ersten Wellenlänge λ_{NIR}, welches unter dem Einfallswinkel von 35° auf die Beschichtung trifft
e) Vergleichen der in Schritt c) bestimmten Reflektivität mit dem ersten Grenzwert;
f1) für den Fall, dass bei dem in Schritt e) durchgeführten Vergleichen kein Überschreiten des ersten Grenzwerts durch die in Schritt c) bestimmte Reflektivität festgestellt wird:
   g1) Ändern der die erste Schichtfolge beschreibenden Parameter und
   h1) Durchführen der Schritte c) bis e);
f2) für den Fall, dass in dem in Schritt e) durchgeführten Vergleichen ein Überschreiten des ersten Grenzwerts festgestellt wird:
   g2) Vergleichen der in Schritt d) bestimmten Reflektivität mit der in Schritt c) bestimmten Reflektivität
   h2.1) für den Fall, dass bei dem in Schritt g2) durchgeführten Vergleichen kein Unterschreiten der in Schritt c) bestimmten Reflektivität durch die in Schritt d) bestimmten Reflektivität um mehr als 10% festgestellt wird:
      i2.1) Ändern der die erste Schichtfolge beschreibenden Parameter und
      j2.1) Durchführen der Schritte c) bis e);
   h2.2) für den Fall, dass bei dem in Schritt g2) durchgeführten Vergleichen ein Unterschreiten der in Schritt c) bestimmten Reflektivität durch die in Schritt d) bestimmten Reflektivität um mehr als 10% festgestellt wird:
      k2.2) Ausgeben der die erste Schichtfolge beschreibenden Parameter als die die Schichtfolge der Beschichtung beschreibenden Parameter.

Die vorstehend für den ersten Aspekt der Erfindung ausführlich beschriebenen Vorteile gelten für die weiteren Aspekte der Erfindung entsprechend.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können Konkretisierungen hinsichtlich Wellenlängenbereich, Einfallswinkelbereich, Reflektivität bei 0° und/oder Reflektivität bei 35° miteinander kombiniert werden.

Ausführungsformen der Erfindung sind in der Zeichnung dargestellt und werden in der nachfolgenden Beschreibung näher erläutert. Es zeigen:
- Fig. 1: ein beispielhaftes Szenario mit von vorne einfallender Infrarotstrahlung;
- Fig. 2: ein beispielhaftes Szenario mit von schräg hinten einfallender Infrarotstrahlung;
- Fig. 3: eine Ausführungsform eines Brillenglases gemäß einem Ausführungsbeispiel der vorliegenden Erfindung;
- Fig. 4A: eine schematische Ansicht einer Ausführungsform eines Brillenglases;
- Fig. 4B: eine Reflexkurve des Brillenglases aus Fig. 4a;
- Fig. 5A: eine schematische Ansicht einer weiteren Ausführungsform eines Brillenglases;
- Fig. 5B: eine Reflexkurve des Brillenglases aus Fig. 5a;
- Fig. 6A: eine schematische Ansicht einer weiteren Ausführungsform eines Brillenglases;
- Fig. 6B: eine Reflexkurve des Brillenglases aus Fig. 6A;
- Fig. 7A: eine schematische Ansicht einer weiteren Ausführungsform eines Brillenglases;
- Fig. 7B: eine Reflexkurve des Brillenglases aus Fig. 7A;
- Fig. 8: eine Reflexkurve eines Brillenglases mit einer Reflektion im blauen bzw. UV-Strahlbereich;
- Fig. 9: ein Flussdiagramm eines Verfahrens zum Auslegen eines Brillenglases;
- Fig. 10: ein Flussdiagram eines Verfahrens zum Herstellen eines Brillenglases;
- Fig. 11: ein Flussdiagramm von Verfahrensschritten zum Bestimmen einer Schichtfolge; und
- Fig. 12: ein Flussdiagramm einer weiteren Ausgestaltung von Verfahrensschritten zum Bestimmen einer Schichtfolge.

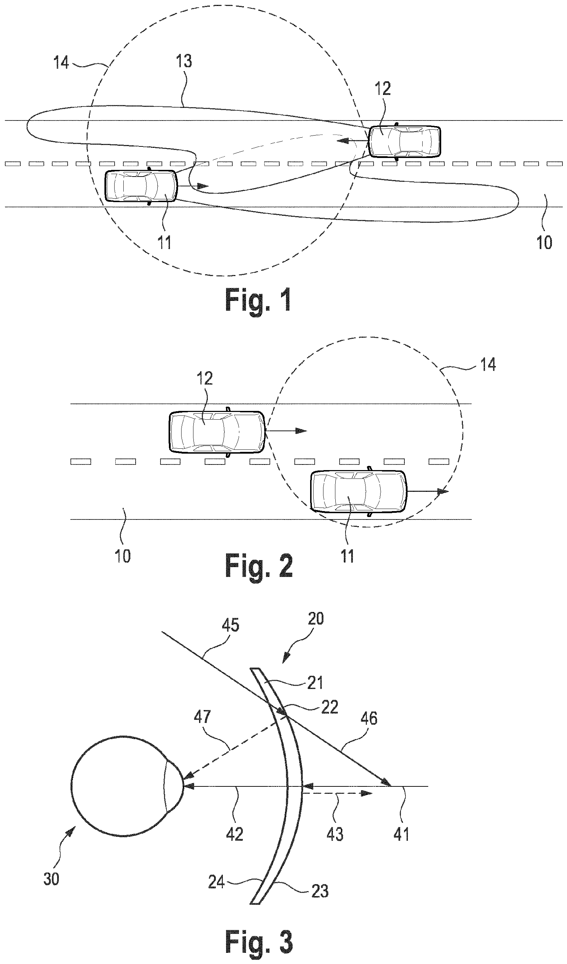

Fig. 1 und Fig. 2 zeigen vorteilhafte Anwendungsszenarien für ein erfindungsgemäßes Brillenglas.

In dem in Fig. 1 gezeigten Szenario fahren ein erstes Fahrzeug 11 und ein zweites Fahrzeug 12 in entgegengesetzter Richtung auf einer Straße mit jeweils einer Fahrbahn in jeder Richtung. Das entgegenkommende Fahrzeug 12 verfügt über einen Scheinwerfer dessen Abblendlichtkegel 13 derart geformt ist, dass eine Blendung des Fahrers des Fahrzeugs 11 weitgehend vermieden wird. Darüber hinaus verfügt das Fahrzeug 12 über einen Nachtsichtassistenten, dessen Infrarotscheinwerfer einen deutlich breiteren IR-Ausleuchtungsbereich 14 aufweist und somit für den Fahrer des Fahrzeugs 12 eine verbesserte Nachtsicht ermöglichen kann. Hierfür kann ein von einer Infrarotkamera aufgenommenes Bild des IR-Ausleuchtungsbereichs 14 auf einem Bildschirm im Fahrzeug 12 wiedergegeben werden.

Der Fahrer des Fahrzeugs 11 ist hierbei allerdings der von vorne kommenden Infrarotstrahlung ausgesetzt. Insbesondere nachts, wenn die Pupillen weit geöffnet sind, kann somit Strahlung ausgehend von entgegenkommenden Autos mit Nachtsichttechnik direkt auf die Netzhaut fallen. Eine Gefährdung der Augen im Rahmen dieser Umweltbedingungen kann nicht ausgeschlossen werden.

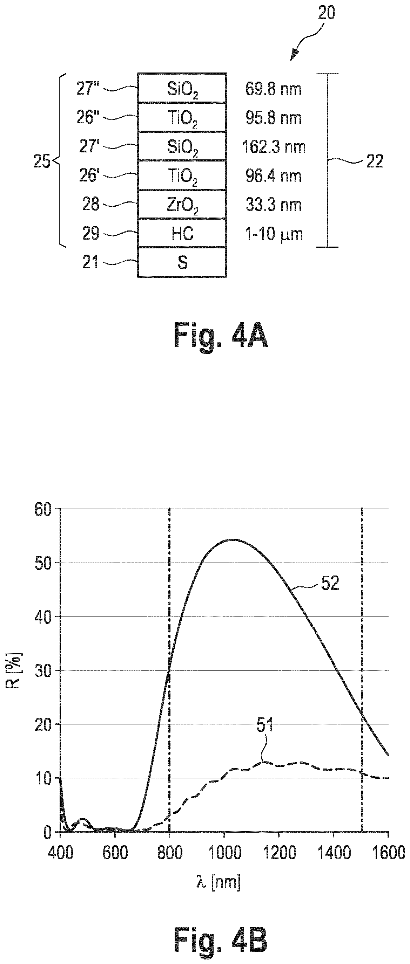

Als Schutz vor derartiger von vorne kommender Infrarotstrahlung kann beispielsweise eine Beschichtung mit zumindest teilweise spiegelnder bzw. reflektierender Wirkung im Infrarotbereich (IR-Bereich) eingesetzt werden. Eine schematische Ansicht einer Ausführungsform eines Brillenglases 20 mit spiegelnder Wirkung im IR-Bereich ist beispielhaft in Fig. 4A gezeigt. Fig. 4B zeigt die entsprechende Reflexkurve 52.

In einem zweiten Anwendungsszenario sind ein erstes Fahrzeug 11 und ein zweites Fahrzeug 12 in gleicher Richtung auf den Parallelfahrbahnen einer mehrspurigen Straße 10 unterwegs. In diesem Fall ist der Fahrer des Fahrzeugs 11 der schräg von hinten kommenden Infrarotstrahlung 14 des Fahrzeugs 12 ausgesetzt. Wenn die Fahrzeuge 11 und 12 mit annähernd gleicher Geschwindigkeit leicht versetzt zueinander unterwegs sind, kann der Fahrer des Fahrzeugs 11 auch über einen längeren Zeitraum der schräg von hinten kommenden Infrarotstrahlung ausgesetzt sein. Demgegenüber kann die Exposition hinsichtlich von vorne kommender Strahlung - abhängig vom Verkehrsaufkommen - auf kurze Zeitintervalle beschränkt. Da Infrarotstrahlung eben nicht im sichtbaren Bereich liegt, wird hierdurch auch kein Schutzreflex wie beispielsweise eine Verkleinerung der Pupille oder ein Lidschlussreflex bewirkt.

Fig. 3 zeigt ein Brillenglas 20 mit einem Linsensubstrat 21 und mit einer auf das Linsensubstrat 21 aufgebrachten Beschichtung 22. Die Beschichtung 22 kann mehreren Schichten hochbrechenden, niedrigbrechenden und optional mittelbrechenden Materials aufweisen. Die Beschichtung 22 weist für nahinfrarotes Licht einer ersten Wellenlänge λ_{NIR}, welches unter einem Einfallswinkel von 0° auf die Beschichtung 22 trifft, eine erste Reflektivität von wenigstens 20% auf. Für nahinfrarotes Licht der ersten Wellenlänge λ_{NIR}, welches unter einem Einfallswinkel von 35° auf die Beschichtung 22 auftrifft, weist die Beschichtung 22 eine zweite Reflektivität auf, die gegenüber der ersten Reflektivität um wenigstens 10% reduziert ist. Die Beschichtung 22 kann auf einer Vorderfläche 23 und/oder auf einer Rückfläche 24 des Linsensubstrats 21 bzw. des Brillenglases 20 angeordnet sein. Im vorliegenden Beispiel ist die Beschichtung 22 auf der Vorderfläche 23 angeordnet.

In dem in Fig. 1 und Fig. 3 gezeigten Szenario trifft das einfallende Licht unter einem Einfallswinkel von 0° (±15°) bezüglich der Senkrechten des Brillenglases 20 auf die Vorderfläche 23. Das unter einem Einfallswinkel von 0° einfallende Licht ist mit Bezugszeichen 41 bezeichnet. Ein erster Teil 42 der einfallenden Strahlung 41 tritt durch das Brillenglas 20 mit der Beschichtung 22 hindurch. Ein zweiter Teil 43 der einfallenden Strahlung 41 wird an der Beschichtung 22 des Brillenglases 20 reflektiert.

Indem die vorgeschlagene Beschichtung 22 für nahinfrarotes Licht der ersten Wellenlänge λ_{NIR}, welches unter einem Einfallswinkel von 0° auf die Beschichtung trifft, eine erste Reflektivität von wenigstens 20% aufweist, und somit eine zumindest teilweise spiegelnde Wirkung bereitstellt, erreicht ein geringerer Anteil des von vorne einfallenden Infrarotlichts das Auge, sodass eine Schutzwirkung im Infrarotbereich bereitgestellt wird. Wie oben beschrieben kann die Exposition hinsichtlich von vorne kommender Strahlung - abhängig vom Verkehrsaufkommen - auf kurze Zeitintervalle beschränkt sein, sodass bereits eine Reflektivität ≥20 % eine Schutzwirkung entfalten kann.

Fig. 3 zeigt ferner schräg von hinten einfallende Infrarotstrahlung 45, welche schräg von hinten, beispielsweise unter einem Einfallswinkel von 35° auf die Rückfläche 24 bzw. die Vorderfläche 23 des Brillenglases 20 trifft. Ein erster Teil 46 der schräg von hinten einfallenden Strahlung 45 tritt durch das Brillenglas 20 mit der Beschichtung 22 hindurch. Ein zweiter Teil 47 der schräg von hinten einfallenden Strahlung 45 wird an der Beschichtung 22 des Brillenglases 20 reflektiert.

Für den Fall, dass allein von vorne eintretende Strahlung 41 unter einem Einfallswinkel von 0° vorhanden ist, würde der in der Druckschrift US 2015/0146161 A1 genannte Infrarotfilter bzw. -spiegel eine effektive Schutzwirkung bieten. Entsprechend würde für den Fall von allein von schräg hinten einfallender Strahlung 45 die aus der Druckschrift US 2015/0241602 bekannte Entspiegelungsschicht im infraroten Bereich einen effektiven Schutz bieten, da die Strahlung fast vollständig durch das Brillenglas hindurchtreten würde.

Eine Kombination der Lehren dieser Druckschriften bietet jedoch nicht die gewünschte Wirkung, denn wenn auf der Rückfläche 24 die aus der US 9,291,746 B2 bekannte Entspiegelung vorgesehen ist und auf der Vorderfläche 23 die aus der US 2015/0146161 A1 bekannte IR-Verspiegelung vorgesehen ist, so würde die schräg von hinten einfallende Strahlung 45 zwar die Rückfläche 24 ungehindert passieren, jedoch an der Vorderfläche 23 mit dem Infrarotspiegel reflektiert werden und in das Auge 30 des Nutzers eindringen. Dies ist insbesondere für den in Fig. 2 gezeigten Anmeldungsfall problematisch, wenn die beiden Fahrzeuge mit annähernd gleicher Geschwindigkeit leicht versetzt zueinander über einen längeren Zeitraum nebeneinander herfahren, da hier eine Strahlenexposition über einen längeren Zeitraum auftreten kann.

Üblicherweise weist die Beschichtung eines Brillenglases eine Vielzahl von alternierend aufeinanderfolgenden niedrig- und hochbrechenden Schichten mit genau vorgegebener Dicke auf. Insbesondere bei hochbrechenden Brillengläsern ist eine solche Breitbandentspiegelung vorteilhaft, um störende Reflektionen zu verringern und zudem eine sehr gute Transmission zu ermöglichen. Üblicherweise sind dabei mehrere hochbrechende Schichten vorgesehen, die zusammen mit den niedrigbrechenden Schichten die gewünschte Entspiegelung bewirken. Dabei beträgt die Gesamtdicke der hochbrechenden Schichten beispielsweise etwa 20 nm bis 500 nm, insbesondere zwischen 100 nm und 400 nm, insbesondere zwischen 150 nm und 300 nm. Vorzugsweise wird somit ein Brillenglas mit guten Antireflexeigenschaften im sichtbaren Bereich bereitgestellt, die darüber hinaus eine verbesserte Schutzfunktion im infraroten Spektralbereich ermöglicht.

Fig. 4A zeigt ein Beispiel eines Brillenglases 20, welches eine spiegelnde Wirkung im Infrarotbereich aufweist. Das Brillenglas 20 weist ein im sichtbaren Spektralbereich transparentes Linsensubstrat 21 auf, das beispielsweise aus einem Kunststoff hergestellt ist. Dieses Linsensubstrat 21 ist mit einer Beschichtung 22 versehen, wobei die Beschichtung 22 eine Schichtfolge 25 mit mehreren Schichten aufweist. Die Beschichtung 22 liegt dabei auf dem Linsensubstrat 21 auf.

Fig. 4B zeigt eine Reflexkurve bzw. Reflektionskurve des in Fig. 4A schematisch dargestellten Brillenglases 20. Auf der horizontalen Achse ist die Wellenlänge λ in nm angegeben, wohingegen auf der vertikalen Achse der Reflektionskoeffizient R in Prozent angegeben ist.

Die untere Kurve 51 zeigt die Reflektivität gegenüber der Wellenlänge für eine konventionelle Antireflex-Beschichtung. Demgegenüber weist das in Fig. 4A gezeigte Brillenglas 20 die Reflexkurve 52 mit deutlich erhöhter spiegelnder bzw. reflektierender Wirkung im nahinfraroten Wellenlängenbereich R > 40% im Bereich von 840 nm bis 1300 nm bzw. R > 20% im Bereich von 750 nm bis 1500 nm. Das in Fig. 4A gezeigte Brillenglas 20 weist dabei ferner eine wirkungsvolle breitbandige Entspiegelung im sichtbaren Wellenlängenbereich mit blauem Restreflex auf.

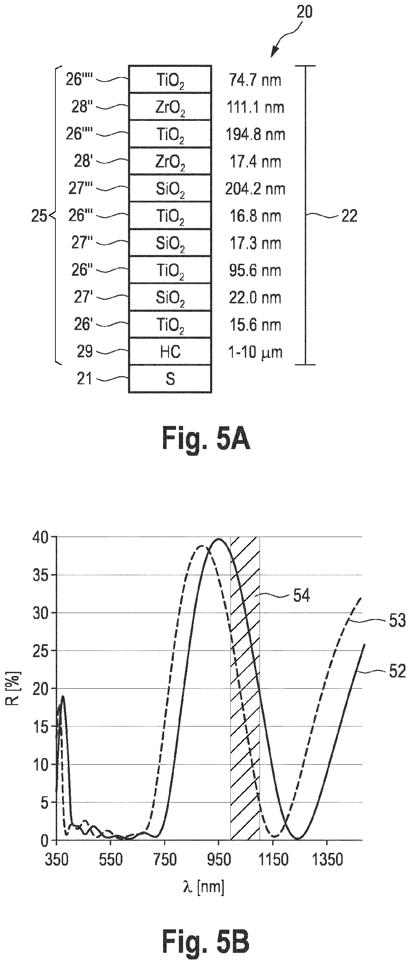

Fig. 5A zeigt eine Ausführungsform eines Brillenglases 20. Das Brillenglas 20 weist ein im sichtbaren Spektralbereich transparentes Linsensubstrat 21 auf, das beispielsweise aus einem Kunststoff hergestellt ist. Dieses Linsensubstrat 21 ist mit einer Beschichtung 22 versehen, wobei die Beschichtung 22 eine Schichtfolge 25 mit mehreren Schichten aufweist. Die Beschichtung 22 liegt dabei auf dem Linsensubstrat 21 auf. Die Beschichtung weist bei einem Einfallswinkel von 0° eine Reflektivität von wenigstens 20% bei einer Wellenlänge λ_{NIR} im Nahinfrarotbereich auf und weist bei einem Einfallswinkel von 35° eine gegenüber dem Einfallswinkel von 0° um wenigstens 10% reduzierte Reflektivität bei der Wellenlänge λ_{NIR} im Nahinfrarotbereich auf.

Die Schichtfolge 25 weist des Weiteren eine Abfolge von hochbrechenden Schichten 26 und niedrigbrechenden Schichten 27 auf. Eine hochbrechende Schicht 26 kann aus einem hochbrechenden Material bestehen, dessen Brechungsindex deutlich über dem des Substratmaterials 21 liegt. Im vorliegenden Anwendungsbeispiel wurde hierfür Titandioxid TiO₂ verwendet. Die niedrigbrechenden Schichten 27 können aus einem niedrigbrechenden Material bestehen, dessen Brechungsindex unterhalb dem des Substratmaterials liegen kann. Im vorliegenden Anwendungsbeispiel wurde hierfür Siliziumdioxid SiO₂ verwendet. Im Allgemeinen gilt, je mehr Schichten, desto wirkungsvoller kann die Antireflexbeschichtung bzw. spiegelnde Wirkung sein. Allerdings wachsen der Aufwand und die Komplexität des Herstellungsprozesses mit der Anzahl der enthaltenen Schichten.

Weiterhin kann die Wirkung des Schichtsystems durch Hinzufügen einer dritten Komponente mit mittlerem Brechungsindex, beispielsweise zwischen dem des hochbrechenden Materials 26 und dem des niedrigbrechenden Materials 27, mehr Flexibilität verliehen werden. Im vorliegenden Beispiel kann hierfür ZrO₂ als weitere Schicht 28 vorgesehen sein. Darüber hinaus kann an dem Substratmaterial 21 ein Hartlack bzw. HardCoat (HC) vorgesehen sein.

Der Hartlackschicht 29 kommt innerhalb der Beschichtung 22 die Funktion zu, dass die Hartlackschicht 29 als Spannungsausgleich zwischen den anorganischen Entspiegelungsschichten 26, 27, 28 dient. Die Entspiegelungsschichten 26, 27, 28 weisen üblicherweise einen relativ geringen Wärmeausdehnungskoeffizienten auf, wohingegen dem aus einem organischen Kunststoff hergestellten Linsensubstrat 21 ein hoher Wärmeausdehnungskoeffizient zukommt. Darüber hinaus kann die dem Linsensubstrat 21 abgewandte Seite der Hartlackschicht 29 eine Oberfläche mit guter Haftfestigkeit für die weiteren Beschichtungsschichten 26, 27, 28 ausbilden.

Bei dem in Fig. 5A gezeigten Ausführungsbeispiel wird auf dem Linsensubstrat 21 zunächst eine Hartlackschicht 29 mit einer Dicke von 1 bis 10 µm, beispielsweise 3µm, bereitgestellt. Auf der Hartlackschicht 29 ist zunächst eine Schicht 26' aus Titanoxid mit einer Dicke von 15,6 nm angeordnet. Auf dieser ist wiederum eine Schicht 27' aus Siliziumoxid mit einer Dicke von 22 nm angeordnet. Auf dieser ist eine zweite Schicht Titanoxid mit einer Dicke von 95,6 nm, auf der wiederum eine zweite Schicht Siliziumoxid mit einer Dicke von 17,3 nm angeordnet ist. Auf diese folgt dann eine dritte Schicht Titanoxid mit einer Dicke von 16,8 nm sowie eine weitere Schicht Siliziumoxid mit einer Dicke von 204,2 nm. Ein Vorteil dieser Schichtdicke ist, dass innerhalb der dielektrischen Schichtfolge 25 erneut eine erhöhte mechanische Stabilität bereitgestellt werden kann. Es folgt eine Schicht Zirkoniumoxid mit einer Dicke von 17,4 nm, eine weitere Schicht Titanoxid mit einer Dicke von 194,8 nm sowie eine weitere Schicht Zirkoniumoxid mit einer Dicke von 11,1 nm sowie eine abschließende hochbrechende Schicht aus Titanoxid mit einer Dicke von 74,7 nm.

Fig. 5B zeigt eine erste Reflexkurve 52 bei einem Einfallswinkel von 0° und eine zweite Reflexkurve 53 bei einem Einfallswinkel von 35° für das in Fig. 5A gezeigte Brillenglas 20. Dabei weist das in Fig. 5A gezeigte Brillenglas 20 eine wirkungsvolle breitbandige Entspiegelung im sichtbaren Wellenlängenbereich mit blauem Restreflex auf, wobei der Restreflex im blauen Bereich optional ist. Die Beschichtung bietet ferner eine deutliche erhöhte Reflektivität bzw. spiegelnde Wirkung im nahinfraroten Wellenlängenbereich R > 30% für 860 bis 1.050 nm.

Ferner bietet die Beschichtung eine möglichst hohe Differenz (großer Unterschied) zwischen der Reflektion bei 0° und 35° für die Wellenlänge von 900 nm bis 1.200 nm, wie aus der Differenz der Kurven 52 und 53 in Fig. 5B ersichtlich ist. In einem Wellenlängenbereich 54 wird bei einem Einfallswinkel von 0° eine Reflektivität von wenigstens 20% bereitgestellt und zusätzlich liegt die Reflektivität bei einem Einfallswinkel von 35° wenigstens 10% absolut bzw. wenigstens 25% relativ unter der Reflektivität bei einem Einfallswinkel von 0°. Dabei ist im vorliegenden Beispiel an der rechten Begrenzung des Bereichs 54 das Kriterium der zumindest 20% Reflektivität bei einem Einfallswinkel von 0° maßgebend, wohingegen am linken Rand des Bereichs 54 die Mindestdifferenz zwischen der Reflektivität bei einem Einfallswinkel von 0° und bei einem Einfallswinkel von 35° ausschlaggebend ist. Im vorliegenden Beispiel weist das Brillenglas 20 mit der Beschichtung 22 über einen Wellenlängenbereich 54, welcher eine Wellenlänge λ_{NIR} umfasst, gegenüber dem Einfallswinkel von 0° eine um wenigstens 10% absolut verminderte Reflektivität auf.

Im Bereich 54 wird somit eine hinreichende Schutzwirkung bei von vorne einfallender Strahlung 41 gewährleistet und zudem sichergestellt, dass die Beschichtung einen ausreichenden Anteil der schräg von hinten einfallenden Strahlung 45 durch das Brillenglas 20 hindurchtreten lässt und somit eine Rückreflektion ins Auge vermindert.

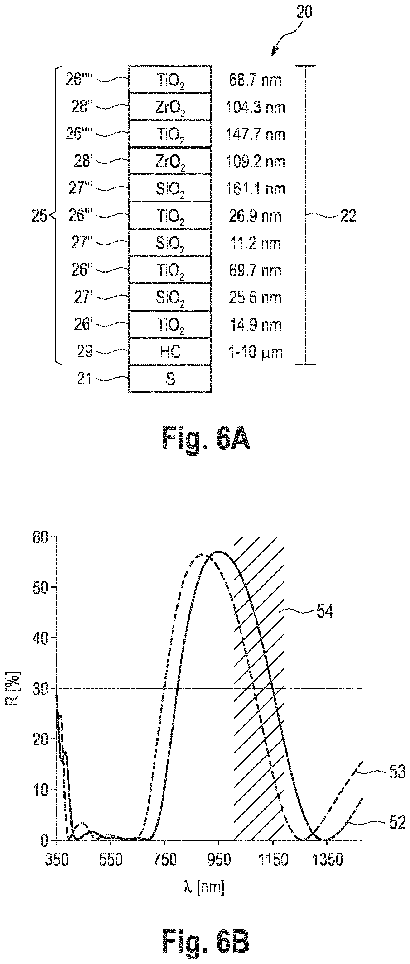

Gemäß Fig. 6A und Fig. 6B wird ein weiteres Ausführungsbeispiel eines Brillenglases 20 bereitgestellt. Das darin vorgeschlagene Brillenglas 20 bietet eine wirkungsvolle breitbandige Entspiegelung im sichtbaren Wellenlängenbereich mit blauem Restreflex. Ferner wird eine deutlich erhöhte Reflektivität im nahinfraroten Wellenlängenbereich R > 30% für 800 nm bis 1.150 nm bereitgestellt. Darüber hinaus wird eine möglichst hohe Differenz (großer Unterschied) zwischen der Reflektivität bei 0° bzw. 35° für den Wellenlängenbereich von 1.000 nm bis 1.300 nm bereitgestellt. In einem Wellenlängenbereich 54 wird erneut eine Reflektivität von wenigstens 20% bereitgestellt. Das Brillenglas 20 weist über einen anderen Wellenlängenbereich 54, welcher eine andere Wellenlänge λ_{NIR} umfasst, gegenüber dem Einfallswinkel von 0° eine absolut um wenigstens 10% verminderte Reflektivität auf.

Auch das in Fig. 6A und Fig. 6B gezeigte Brillenglas 20 hat eine Beschichtung 22, die folgende Schichtfolge 25 aufweist: eine erste Schicht TiO₂ 26', gefolgt von einer ersten Schicht SiO₂ 27', gefolgt von einer zweiten Schicht TiO₂ 26", gefolgt von einer zweiten Schicht SiO₂ 27", gefolgt von einer dritten Schicht TiO₂ 26"', gefolgt von einer dritten Schicht SiO₂ 267"', gefolgt von einer ersten Schicht ZrO₂ 28', gefolgt von einer vierten Schicht TiO₂ 26"", gefolgt von einer zweiten Schicht ZrO₂ 28", gefolgt von einer fünften Schicht TiO₂ 26'"". Hierbei kann zwischen dem Linsensubstrat 21 und der ersten Schicht TiO₂ 26' eine Hartlackschicht 29 vorgesehen sein. Die Schichtdicken ergeben sich aus Fig. 6A.

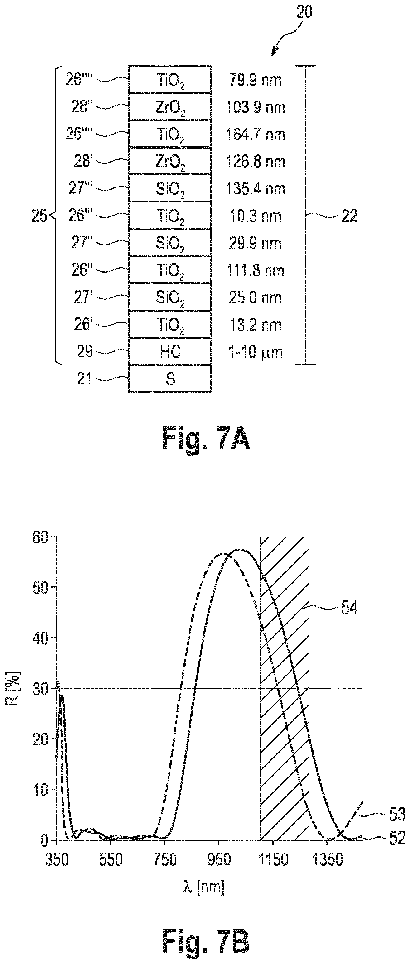

Fig. 7A und Fig. 7B zeigen ein weiteres Ausführungsbeispiel eines Brillenglases 20 für einen weiteren Wellenlängenbereich 54. Das darin vorgeschlagene Brillenglas bietet eine wirkungsvolle breitbandige Entspiegelung im sichtbaren Wellenlängenbereich mit blauem Restreflex. Ferner wird eine deutlich erhöhte Reflektivität im nahinfraroten Wellenlängenbereich R > 30% für 850 nm bis 1.250 nm bereitgestellt. Darüber hinaus wird eine möglichst hohe Differenz (großer Unterschied) zwischen der Reflektivität bei 0° bzw. 35° für den Wellenlängenbereich von 1.100 nm bis 1.400 nm bereitgestellt.

Es versteht sich, dass der gewünschte Wellenlängenbereich, sowie die gewünschte reflektierende Wirkung bei der Wellenlänge λ_{NIR} im Nahinfrarotbereich bei einem Einfallswinkel von 0° und die bei einem Einfallswinkel von 35° gegenüber dem Einfallswinkel von 0° gewünschte Reduktion der Reflektivität bei der Wellenlänge λ_{NIR} im Nahinfrarotbereich durch Modifikation der Schichtdicken verändert werden kann. Hierbei können die erforderlichen Schichtdicken und/oder Schichtfolgen von Materialien unterschiedlicher Brechungsindices durch computerimplementierte Simulationen ermittelt werden. Je kleiner der zu schützende Bereich ist, desto effektiver lässt sich der Unterschied maximieren.

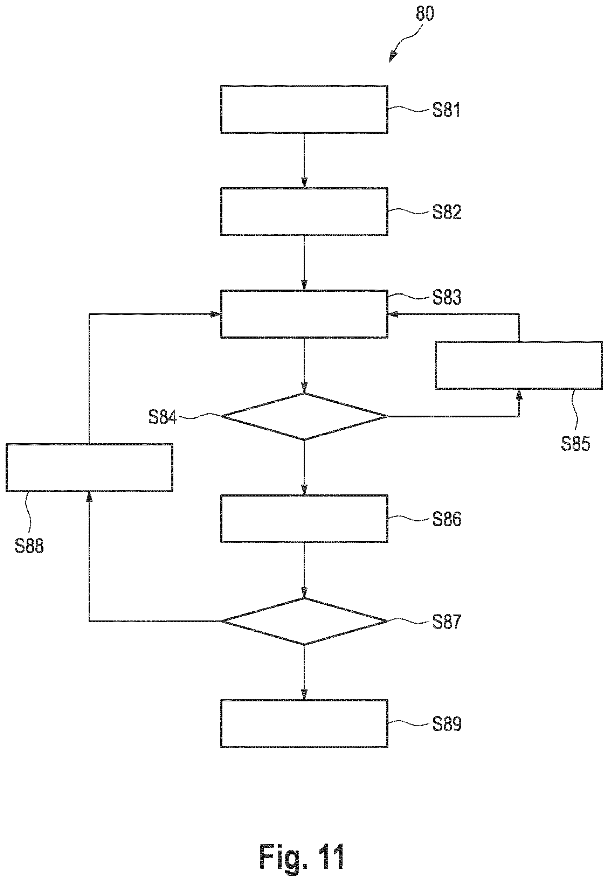

Eine Auslegung eines Schichtaufbaus kann wie folgt erfolgen. Zunächst können ein Substratmaterial sowie potentielle Schichtmaterialien ausgewählt werden. Vorzugsweise werden hierbei Materialen ausgewählt, die bereits bei anderen Produkten bzw. Beschichtungen zum Einsatz kommen. Ein Vorteil ist eine effiziente Fertigung. Für das Substratmaterial und die Schichtmaterialien wird der Brechungsindex n(λ) = nᵣₑₐₗ (λ)+ i^{∗}k(λ) als Funktion der Wellenlänge λ über den Wellenlängenbereich bereitgestellt, der für das Brillenglas gewünscht ist. Beispielsweise über einen Bereich von UV-Licht über den sichtbaren Bereich bis zum (Nah-)Infrarotbereich, beispielsweise von 280 nm bis 1500 nm. Dabei ist nᵣₑₐₗ(λ) der reelle Brechungsindex und k(λ) der Extinktionskoeffizient. Weiterhin werden als Randbedingungen eine oder mehrere spektralen Anforderungen bereitgestellt, beispielsweise (1) effektive Antireflexwirkung im sichtbaren Bereich, beispielsweise eine Transmission im Wellenlängenbereich von 400 nm bis 700 nm ≥ 95%; (2) eine Reflektivität R≥20% (vorzugsweise ≥30%, ≥40%) für einen Einfallswinkel von 0° Winkel bei einer Wellenlänge λ_{NIR} im nahen Nahinfrarotbereich, vorzugsweise über einen vorgegebenen Wellenlängenbereich; (3) bei einem Einfallswinkel von 35° eine gegenüber dem Einfallswinkel von 0° um wenigstens 10% reduzierte Reflektivität bei der Wellenlänge λ_{NIR} im Nahinfrarotbereich; (4) optional weitere Randbedingungen im UV- oder kurzwelligen blauen Spektral-Bereich. Basierend darauf kann die Simulationen mit einem möglichst einfachen Schichtaufbau beginnen, welcher die vielfältigen Anforderungen gegebenenfalls noch nicht erfüllt. Anschließend können dem Schichtaufbau iterativ weitere Schichten hinzugefügt und getestet werden, inwiefern die spektralen Anforderungen erfüllt werden. Durch Hinzufügen einer oder mehrerer Schichten bzw. durch Variation einer oder mehrerer Schichtdicken im Schichtaufbau, beispielsweise durch trial-and-error Simulationen, kann eine Übereinstimmung zwischen den spektralen Anforderungen und dem erzielten Simulationsergebnis erreicht werden. Ein beispielhaftes Vorgehen ist nachfolgend unter Bezugnahme auf Fig. 11 beschrieben. Es versteht sich, dass der abschließende Schichtaufbau für stabile Produktionsbedingungen nicht zu komplex sein sollte. Bei mehreren möglichen Lösungen wird vorzugsweise derjenige Schichtaufbau ausgewählt, welcher sich am besten fertigen lässt.

Hierbei kann der Wellenlängenbereich innerhalb des infraroten Spektrums, für den das Auge besonders geschützt werden soll, variabel festgelegt werden. Das ist besonders dann sinnvoll, wenn ein Wellenlängenbereich identifiziert wird, in dem das Auge besonders sensibel auf einfallendes IR-Licht reagiert, oder wenn es eine bestimmte Anwendung gibt, bei der besonders viel Licht einer bestimmten Wellenlänge oder eines bestimmten Wellenlängenbereiches auf das Brillenglas auftreffen kann. Wird beispielsweise der Bereich zwischen 900nm und 1200nm als besonders kritisch eingestuft, dann kann durch eine entsprechende Anpassung des Schichtdesigns genau in diesem Bereich der Unterschied zwischen Reflexion bei 0° bzw. 35° (30°-45°) maximiert werden Für diesen Bereich wurde im Anwendungsbeispiel gemäß Fig. 5A und B eine durchschnittliche (relative) Reduktion der schrägen Reflektion um ca. 50% gegenüber der senkrechten Reflektion erreicht. In den Anwendungsbeispielen gemäß Fig. 6A und B und Fig. 7A und B wurde der zu optimierende Bereich von 900-1200nm (Fig. 5A, B) nach 1000-1300nm (Fig. 6A, B) bzw. 1100-1400nm (Fig. 7A, B) verschoben.

Vorzugsweise kann ein Brillenglas gemäß der vorgeschlagenen Offenbarung ferner zusätzliche Beschichtungen wahlweise auf der Vorderfläche 23 oder Rückfläche 24 aufweisen.

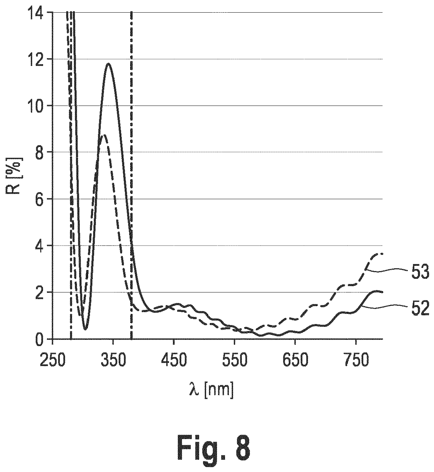

In diesem Kontext zeigt Fig. 8 eine Reflexkurve eine vorteilhafte Entspiegelung, welche vorzugsweise auf der Rückfläche 24 vorgesehen sein kann, um zusätzlichen Schutz vor hochenergetischem oder kurzwelligem blauem Licht zu bieten. Auch die in Fig. 8 gezeigte Beschichtung bietet eine wirkungsvolle breitbandige Entspiegelung im sichtbaren Wellenlängenbereich mit blauem Restreflex. Die Kurve 52 zeigt die Reflektivität bei einem Einfallswinkel von 0°, wohingegen die Kurve 53 die Reflektivität bei einem Einfallswinkel von 35° angibt. Die nachfolgende Tabelle zeigt den Schichtaufbau der Beschichtung gemäß Fig. 8.

**TABELLE 1:**

| Schicht | Dicke (nm) |
|---|---|
| Linsensubstrat | |
| HC | 3.000,0 |
| ZrO₂ | 18,7 |
| SiO₂ | 30,9 |
| ZrO₃ | 86,7 |
| TiO₂ | 8,0 |
| ZrO₂ | 44,5 |
| ITO | 3,0 |
| SiO₂ | 85,7 |

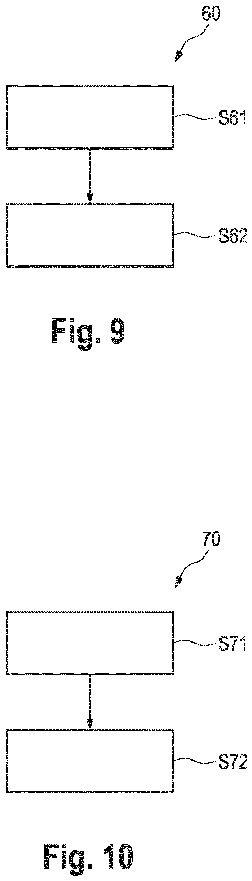

Fig. 9 zeigt ein Flussdiagram eines, insbesondere computerimplementierten, Verfahrens 60 zur Auslegung eines Brillenglases 20. Das Brillenglas 20 weist ein Linsensubstrat 21 und eine auf das Linsensubstrat aufgebrachte Beschichtung 22 mit einer die Beschichtung 22 bildenden Schichtfolge 25 auf.

Im vorliegenden Beispiel wird in einem ersten Schritt S61 ein Linsensubstrat 21 ausgewählt. Das Linsensubstrat kann eine gewünschte dioptrische und/oder prismatische optische Wirkung bereitstellen.

In einem zweiten Schritt S62 wird eine Schichtfolge 25 bestimmt, wobei die Bestimmung der Schichtfolge 25 mit der Maßgabe erfolgt, dass die Beschichtung 22 für nahinfrarotes Licht einer ersten Wellenlänge λ_{NIR}, welches unter einem Einfallswinkel von 0° auf die Beschichtung 22 trifft, eine erste Reflektivität von wenigstens 20% aufweist und für nahinfrarotes Licht der ersten Wellenlänge λ_{NIR}, welches unter einem Einfallswinkel von 35° auf die Beschichtung 22 auftrifft, eine zweite Reflektivität aufweist, die gegenüber der ersten Reflektivität um wenigstens 10% reduziert ist. Beispielhafte Schichtfolgen 25 sind vorstehend beschrieben.

Fig. 10 zeigt ein Flussdiagram eines Verfahrens 70 zum Herstellen eines Brillenglases 20. Das Brillenglas 20 weist ein Linsensubstrat 21 und eine auf das Linsensubstrat aufgebrachte Beschichtung 22 mit einer die Beschichtung 22 bildenden Schichtfolge 25 auf.

In einem ersten Schritt S71 wird ein Linsensubstrat 21 bereitgestellt. Das Linsensubstrat kann eine gewünschte dioptrische und/oder prismatische optische Wirkung bereitstellen.

In einem zweiten Schritt S72 wird die Schichtfolge 25 aufgebracht, wobei das Aufbringen der Schichtfolge 25 mit der Maßgabe erfolgt, dass die Beschichtung 22 für nahinfrarotes Licht einer ersten Wellenlänge λ_{NIR}, welches unter einem Einfallswinkel von 0° auf die Beschichtung 22 trifft, eine erste Reflektivität von wenigstens 20% aufweist und für nahinfrarotes Licht der ersten Wellenlänge λ_{NIR}, welches unter einem Einfallswinkel von 35° auf die Beschichtung 22 auftrifft, eine zweite Reflektivität aufweist, die gegenüber der ersten Reflektivität um wenigstens 10% reduziert ist. Beispielhafte Schichtfolgen 25 sind vorstehend beschrieben. Die einzelnen Schichten der Schichtfolge 25 werden in nacheinander folgenden Teilschritten aufgebracht. Beispielhafte Schichtfolgen 25 sind in den oben genannten Ausführungsbeispielen offenbart, welche die Maßgabe erfüllen. Alternative Schichtfolgen können insbesondere nach den oben genannten computerimplementierten Verfahren zur Auslegung eines Brillenglases 20 erhalten und entsprechend auf das Linsensubstrat 21 aufgebracht werden.

Fig. 11 zeigt ein beispielhaftes Flussdiagramm 80 von Verfahrensschritten zum Bestimmen einer Schichtfolge 25, wie diese beispielhaft bei einem, insbesondere computerimplementierten, Verfahrens 60 zur Auslegung eines Brillenglases 20, wie in Fig. 9 gezeigt, zum Einsatz kommen können. Die Verfahrensschritte eines beispielhaften computerimplementierten Verfahrens werden anhand des Flussdiagramms 80 in Fig. 11 erläutert.

In einem ersten Schritt S81 werden eine erste Schichtfolge 25 einer Beschichtung 22 beschreibende Parameter bereitgestellt.

In einem zweiten Schritt S82 wird eines die erste Reflektivität repräsentierender erster Grenzwert, beispielsweise von wenigstens 20%, bereitgestellt.

In einem dritten Schritt S83 wird die Reflektivität der Beschichtung 22 für nahinfrarotes Licht der ersten Wellenlänge λ_{NIR}, welches unter dem Einfallswinkel von 0° auf die Beschichtung 22 trifft bestimmt.

In einem vierten Schritt S84 wird die in Schritt S83 bestimmte bzw. gemessene Reflektivität mit dem ersten Grenzwert verglichen.

Für den Fall, dass bei dem Vergleich in Schritt S84 kein Überschreiten des ersten Grenzwerts durch die in Schritt S83 bestimmte Reflektivität festgestellt wird, werden in Schritt S85 die die erste Schichtfolge 25 beschreibenden Parameter abgeändert. Nachfolgend werden die Schritte S83 und S84 erneut durchgeführt. Es handelt sich somit um ein iteratives Vorgehen zur Bestimmung einer Beschichtung 22 mit einer Schichtabfolge 25, welche die gewünschte Reflektivität aufweist.

Für den Fall, dass bei dem Vergleich in Schritt S84 ein Überschreiten des ersten Grenzwerts durch die in Schritt S83 bestimmte Reflektivität festgestellt wird, wird in Schritt S86 die Reflektivität der Beschichtung 22 für nahinfrarotes Licht der ersten Wellenlänge λ_{NIR}, welches unter dem Einfallswinkel von 35° auf die Beschichtung 22 trifft bestimmt.

Im folgenden Schritt S87 wird die in Schritt S86 bestimmte Reflektivität mit der in Schritt S83 bestimmten Reflektivität verglichen .

Für den Fall, dass bei dem Vergleich in Schritt S87 kein Unterschreiten der in Schritt S83 bestimmten bzw. gemessene Reflektivität durch die in Schritt S86 bestimmte bzw. gemessene Reflektivität um mehr als 10% festgestellt wird, werden in Schritt S88 die die erste Schichtfolge 25 beschreibenden Parameter abgeändert.

Für den Fall, dass bei dem Vergleich in Schritt S87 ein Unterschreiten der in Schritt S83 bestimmten bzw. gemessene Reflektivität durch die in Schritt S86 bestimmte bzw. gemessene Reflektivität um mehr als 10% festgestellt wird, werden in Schritt S89 der die erste Schichtfolge beschreibenden Parameter als die die Schichtfolge 25 der Beschichtung 22 beschreibenden Parameter ausgegeben.

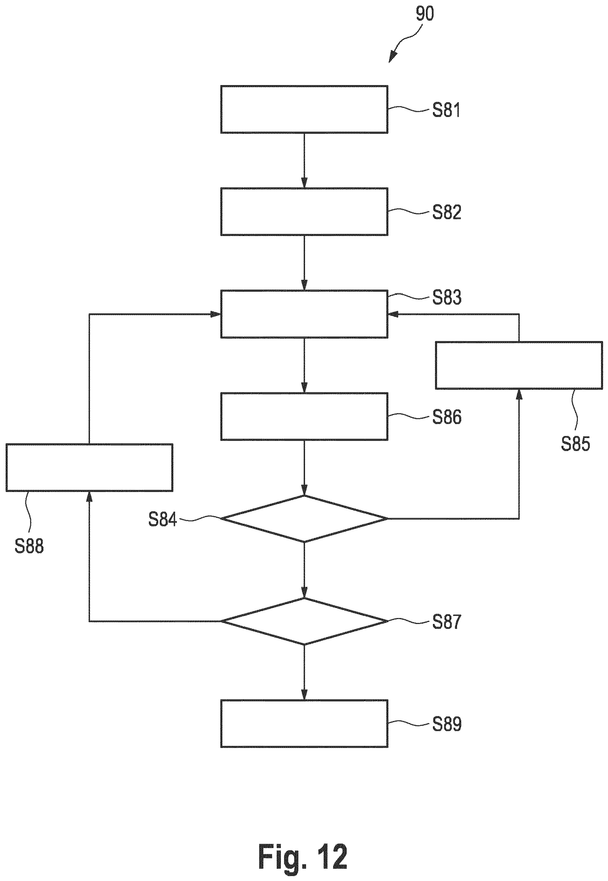

Fig. 12 zeigt eine Abwandlung des beispielhaften Flussdiagramms 80 von Verfahrensschritten zum Bestimmen einer Schichtfolge 25 aus Fig. 11. Verfahrensschritte können auch in einer anderen Reihenfolge und/oder parallelisiert ablaufen, soweit diese nicht voneinander abhängen. In dem in Fig. 12 gezeigten Flussdiagramm erfolgt die Bestimmung bzw. Messung der Reflektivität der Beschichtung 22 für nahinfrarotes Licht der ersten Wellenlänge λ_{NIR}, welches unter dem Einfallswinkel von 35° auf die Beschichtung 22 trifft, gemäß Schritt S86 nunmehr vor dem Vergleich gemäß Schritt S84. Insbesondere können die Schritte S83 und S86 auch parallel durchgeführt werden.

Zusammenfassend kann mit den hierin vorgeschlagenen Lösungen insbesondere eine verbesserte Schutzwirkung der Augen im infraroten Spektralbereich erreicht werden.

## Patentansprüche

1. Brillenglas (20) mit einem Linsensubstrat (21) und mit einer auf das Linsensubstrat aufgebrachten Beschichtung (22), wobei die Beschichtung (22) für nahinfrarotes Licht einer ersten Wellenlänge λ_{NIR}, welches unter einem Einfallswinkel von 0° auf die Beschichtung trifft, eine erste Reflektivität von wenigstens 20% aufweist, **dadurch gekennzeichnet, dass** die Beschichtung für nahinfrarotes Licht der ersten Wellenlänge λ_{NIR}, welches unter einem Einfallswinkel von 35° auf die Beschichtung auftrifft, eine zweite Reflektivität aufweist, die gegenüber der ersten Reflektivität absolut um wenigstens 10% reduziert ist.

2. Brillenglas nach Anspruch 1, **gekennzeichnet durch** eine mittlere Transmission in einem sichtbaren Wellenlängenbereich von 400 nm bis 700 nm und bei einem Einfallswinkel von 0° von mindestens 95 % oder von mindestens 98 %.

3. Brillenglas nach einem der vorhergehenden Ansprüche, **dadurch gekennzeichnet, dass** die Wellenlänge λ_{NIR} im Nahinfrarotbereich in einem Wellenlängenbereich aus der Gruppe von Wellenlängenbereichen von 780 nm bis 1500 nm, von 800 nm bis 1200 nm oder von 850 nm bis 1100 nm liegt.

4. Brillenglas nach einem der vorhergehenden Ansprüche, **dadurch gekennzeichnet, dass** die Beschichtung (22) über einen Wellenlängenbereich, welcher die Wellenlänge λ_{NIR} im Nahinfrarotbereich umfasst, gegenüber dem Einfallswinkel von 0° eine um wenigstens 10% reduzierte Reflektivität aufweist.

5. Brillenglas nach einem der vorhergehenden Ansprüche, **dadurch gekennzeichnet, dass** die Beschichtung (22) bei einem Einfallswinkel von 0° eine Reflektivität aus einer Gruppe von Reflektivitäten von wenigstens 25%, von wenigstens 30%, von wenigstens 40% und von wenigstens 50% bei der Wellenlänge λ_{NIR} im Nahinfrarotbereich aufweist.

6. Brillenglas nach einem der vorhergehenden Ansprüche, **dadurch gekennzeichnet, dass** die Beschichtung (22) bei einem Einfallswinkel von 35° eine gegenüber dem Einfallswinkel von 0° um wenigstens einen Faktor aus einer Gruppe von 15%, 20%, 25% und 30% reduzierte Reflektivität bei der Wellenlänge λ_{NIR} im Nahinfrarotbereich aufweist.

7. Brillenglas nach einem der vorhergehenden Ansprüche, **dadurch gekennzeichnet, dass** die Beschichtung (22) über einen Einfallswinkelbereich von 30° bis 45° eine gegenüber dem Einfallswinkel von 0° um wenigstens 10% reduzierte Reflektivität bei der Wellenlänge λ_{NIR} im Nahinfrarotbereich aufweist.

8. Brillenglas nach einem der vorhergehenden Ansprüche, **dadurch gekennzeichnet, dass** das Linsensubstrat (21) eine Vorderfläche (23) und eine Rückfläche (24) aufweist und die Beschichtung (22) auf der Vorderfläche des Linsensubstrats (21) aufgebracht ist.

9. Brillenglas nach Anspruch 8, **dadurch gekennzeichnet, dass** das Linsensubstrat (21) ferner einen IR-Absorber aufweist.

10. Brillenglas nach Anspruch 8 oder 9, **dadurch gekennzeichnet, dass** ferner eine Beschichtung (22) nach einem der vorhergehenden Ansprüche auf der Rückfläche (24) des Linsensubstrats (21) aufgebracht ist.

11. Brillenglas nach einem der vorhergehenden Ansprüche, **dadurch gekennzeichnet, dass** das Linsensubstrat (21) eine Vorderfläche (22) und eine Rückfläche (24) aufweist, wobei die Rückfläche eine Antireflexbeschichtung für wenigstens einen Bereich aus einer Gruppe von sichtbarem Licht, IR-Licht und UV-Licht aufweist und/oder die Vorderfläche eine reflektierende Beschichtung für wenigstens einen Bereich aus einer Gruppe von UV-Licht und kurzwelligem blauen Licht aufweist.

12. Computerimplementiertes (60) Verfahren zur Auslegung eines Brillenglases (20) mit einem Linsensubstrat (21) und mit einer auf das Linsensubstrat (21) aufgebrachten Beschichtung (22) mit einer die Beschichtung (22) bildenden Schichtfolge (25), wobei das Verfahren folgenden Schritt aufweist:
- Bestimmen der Schichtfolge (25), wobei das Bestimmen der Schichtfolge (25) mit der Maßgabe erfolgt, dass die Beschichtung (22) für nahinfrarotes Licht einer ersten Wellenlänge λ_{NIR}, welches unter einem Einfallswinkel von 0° auf die Beschichtung (22) trifft, eine erste Reflektivität von wenigstens 20% aufweist und für nahinfrarotes Licht der ersten Wellenlänge λ_{NIR}, welches unter einem Einfallswinkel von 35° auf die Beschichtung (22) auftrifft, eine zweite Reflektivität aufweist, die gegenüber der ersten Reflektivität um wenigstens 10% reduziert ist.

13. Computerimplementiertes Verfahren zur Auslegung eines Brillenglases (20) nach Anspruch 12, **dadurch gekennzeichnet, dass** das Bestimmen der Schichtfolge (25) folgende Schritte umfasst:
a) Bereitstellen von eine erste Schichtfolge (25) einer Beschichtung (22) beschreibenden Parametern (S81);
b) Bereitstellen eines die erste Reflektivität repräsentierenden ersten Grenzwerts von wenigstens 20% (S82);
c) Bestimmen der Reflektivität der Beschichtung (22) für nahinfrarotes Licht der ersten Wellenlänge λ_{NIR}, welches unter dem Einfallswinkel von 0° auf die Beschichtung (22) trifft (S83);
d) Vergleichen der in Schritt c) bestimmten Reflektivität mit dem ersten Grenzwert (S84);
e1) für den Fall, dass bei dem in Schritt d) durchgeführten Vergleichen kein Überschreiten des ersten Grenzwerts durch die in Schritt c) bestimmte Reflektivität festgestellt wird:
f1) Ändern der die erste Schichtfolge (25) beschreibenden Parameter (S85) und
g1) Durchführen der Schritte c) bis d);
e2) für den Fall, dass in dem in Schritt d) durchgeführten Vergleichen ein Überschreiten des ersten Grenzwerts festgestellt wird:
f2) Bestimmen der Reflektivität der Beschichtung (22) für nahinfrarotes Licht der ersten Wellenlänge λ_{NIR}, welches unter dem Einfallswinkel von 35° auf die Beschichtung (22) trifft (S86)
g2) Vergleichen der in Schritt f2) bestimmten Reflektivität mit der in Schritt c) bestimmten Reflektivität (S87)
h2.1) für den Fall, dass bei dem in Schritt g2) durchgeführten Vergleichen kein Unterschreiten der in Schritt c) bestimmten Reflektivität durch die in Schritt f2) bestimmte Reflektivität um mehr als 10% festgestellt wird:
i2.1) Ändern der die erste Schichtfolge (25) beschreibenden Parameter (S88) und
j2.1) Durchführen der Schritte c) bis d)
h2.2) für den Fall, dass bei dem in Schritt g2) durchgeführten Vergleichen ein Unterschreiten der in Schritt c) bestimmten Reflektivität durch die in Schritt f2) bestimmte Reflektivität um mehr als 10% festgestellt wird
k2.2) Ausgeben der die erste Schichtfolge (25) beschreibenden Parameter als die die Schichtfolge (25) der Beschichtung (22) beschreibenden Parameter (S89).

14. Computerimplementiertes Verfahren zur Auslegung eines Brillenglases (20) nach Anspruch 12, **dadurch gekennzeichnet, dass** das Bestimmen der Schichtfolge (25) folgende Schritte umfasst:
a) Bereitstellen von eine erste Schichtfolge (25) einer Beschichtung (22) beschreibenden Parametern (S81);
b) Bereitstellen eines die erste Reflektivität repräsentierenden ersten Grenzwerts von wenigstens 20% (S82);
c) Bestimmen der Reflektivität der Beschichtung (22) für nahinfrarotes Licht der ersten Wellenlänge λ_{NIR}, welches unter dem Einfallswinkel von 0° auf die Beschichtung (22) trifft (S83);
d) Bestimmen der Reflektivität der Beschichtung (22) für nahinfrarotes Licht der ersten Wellenlänge λ_{NIR}, welches unter dem Einfallswinkel von 35° auf die Beschichtung (22) trifft (S86);
e) Vergleichen der in Schritt c) bestimmten Reflektivität mit dem ersten Grenzwert (S84);
f1) für den Fall, dass bei dem in Schritt e) durchgeführten Vergleichen kein Überschreiten des ersten Grenzwerts durch die in Schritt c) bestimmte Reflektivität festgestellt wird:
g1) Ändern der die erste Schichtfolge (25) beschreibenden Parameter (S85) und
h1) Durchführen der Schritte c) bis e);
f2) für den Fall, dass in dem in Schritt e) durchgeführten Vergleichen ein Überschreiten des ersten Grenzwerts festgestellt wird:
g2) Vergleichen der in Schritt d) bestimmten Reflektivität mit der in Schritt c) bestimmten Reflektivität (S87)
h2.1) für den Fall, dass bei dem in Schritt g2) durchgeführten Vergleichen kein Unterschreiten der in Schritt c) bestimmten Reflektivität durch die in Schritt d) bestimmten Reflektivität um mehr als 10% festgestellt wird:
i2.1) Ändern der die erste Schichtfolge (25) beschreibenden Parameter (S88) und
j2.1) Durchführen der Schritte c) bis e);
h2.2) für den Fall, dass bei dem in Schritt g2) durchgeführten Vergleichen ein Unterschreiten der in Schritt c) bestimmten Reflektivität durch die in Schritt d) bestimmten Reflektivität um mehr als 10% festgestellt wird:
k2.2) Ausgeben der die erste Schichtfolge (25) beschreibenden Parameter als die die Schichtfolge (25) der Beschichtung (22) beschreibenden Parameter (S89).

15. Verfahren (70) zum Herstellen eines Brillenglases (20) mit einem Linsensubstrat (21) und mit einer auf das Linsensubstrat aufgebrachten Beschichtung (22) mit einer die Beschichtung (22) bildenden Schichtfolge (25), wobei das Verfahren folgende Schritte aufweist:
- Bereitstellen eines Linsensubstrats (21);
- Aufbringen der Schichtfolge (25) auf das Linsensubstrat (21), wobei das Aufbringen der Schichtfolge (25) mit der Maßgabe erfolgt, dass die Beschichtung (22) für nahinfrarotes Licht einer ersten Wellenlänge λ_{NIR}, welches unter einem Einfallswinkel von 0° auf die Beschichtung (22) trifft, eine erste Reflektivität von wenigstens 20% aufweist und für nahinfrarotes Licht der ersten Wellenlänge λ_{NIR}, welches unter einem Einfallswinkel von 35° auf die Beschichtung (22) auftrifft, eine zweite Reflektivität aufweist, die gegenüber der ersten Reflektivität um wenigstens 10% reduziert ist.

## Claims

1. Spectacle lens (20) comprising a lens substrate (21) and comprising a coating (22) that is applied to the lens substrate, wherein the coating (22) has a first reflectivity of at least 20% for near infrared light at a first wavelength λ_{NIR}, which impinges on the coating at an angle of incidence of 0°, **characterized in that** the coating has a second reflectivity for near infrared light at the first wavelength λ_{NIR}, which impinges on the coating at an angle of incidence of 35°, said second reflectivity being reduced by at least 10% in absolute terms in relation to the first reflectivity.

2. Spectacle lens according to Claim 1, **characterized by** a mean transmission of at least 95% or of at least 98% in a visible wavelength range of 400 nm to 700 nm and in the case of an angle of incidence of 0°.

3. Spectacle lens according to any one of the preceding claims, **characterized in that** the wavelength λ_{NIR} in the near infrared range lies in a wavelength range from the group of wavelength ranges of from 780 nm to 1500 nm, from 800 nm to 1200 nm, or from 850 nm to 1100 nm.

4. Spectacle lens according to any one of the preceding claims, **characterized in that** the coating (22) has a reflectivity that is reduced by at least 10% in relation to the angle of incidence of 0° over a wavelength range which comprises the wavelength λ_{NIR} in the near infrared range.

5. Spectacle lens according to any one of the preceding claims, **characterized in that**, at an angle of incidence of 0°, the coating (22) has a reflectivity from a group of reflectivities of at least 25%, of at least 30%, of at least 40% and of at least 50% at the wavelength λ_{NIR} in the near infrared range.

6. Spectacle lens according to any one of the preceding claims, **characterized in that**, at an angle of incidence of 35°, the coating (22) has a reflectivity that is reduced by at least a factor from a group of 15%, 20%, 25% and 30% in relation to the angle of incidence of 0° at the wavelength λ_{NIR} in the near infrared range.

7. Spectacle lens according to any one of the preceding claims, **characterized in that**, over an angle of incidence range of 30° to 45°, the coating (22) has a reflectivity that is reduced by at least 10% in relation to the angle of incidence of 0° at the wavelength λ_{NIR} in the near infrared range.

8. Spectacle lens according to any one of the preceding claims, **characterized in that** the lens substrate (21) has a front surface (23) and a back surface (24) and the coating (22) is applied to the front surface of the lens substrate (21).

9. Spectacle lens according to Claim 8, **characterized in that** the lens substrate (21) further has an IR absorber.

10. Spectacle lens according to Claim 8 or 9, **characterized in that**, further, a coating (22) according to any one of the preceding claims is applied to the back surface (24) of the lens substrate (21) .

11. Spectacle lens according to any one of the preceding claims, **characterized in that** the lens substrate (21) has a front surface (22) and a back surface (24); wherein the back surface has an antireflection coating for at least one range from a group of visible light, IR light and UV light and/or the front surface has a reflecting coating for at least one range from a group of UV light and short-wavelength blue light.

12. Computer-implemented (60) method for designing a spectacle lens (20) comprising a lens substrate (21) and comprising a coating (22) that is applied to the lens substrate (21), with a layer sequence (25) forming the coating (22), wherein the method comprises the following step:
- determining the layer sequence (25), wherein the layer sequence (25) is determined with the stipulation that the coating (22) has a first reflectivity of at least 20% for near infrared light at a first wavelength λ_{NIR}, which impinges on the coating (22) at an angle of incidence of 0°, and a second reflectivity for near infrared light at the first wavelength λ_{NIR}, which impinges on the coating (22) at an angle of incidence of 35°, said second reflectivity being reduced by at least 10% in relation to the first reflectivity.

13. Computer-implemented method for designing a spectacle lens (20) according to Claim 12, **characterized in that** determining the layer sequence (25) comprises the following steps:
a) providing parameters that describe a first layer sequence (25) of a coating (22) (S81);
b) providing a first limit of at least 20% that represents the first reflectivity (S82);
c) determining the reflectivity of the coating (22) for near infrared light at the first wavelength λ_{NIR}, which is incident on the coating (22) at the angle of incidence of 0° (S83);
d) comparing the reflectivity determined in step
c) with the first limit (S84);
e1) should the comparison carried out in step d) determine that the first limit was not exceeded by the reflectivity determined in step c):
f1) modifying the parameters that describe the first layer sequence (25) (S85) and
g1) carrying out steps c) to d);
e2) should the comparison carried out in step d) determine that the first limit was exceeded:
f2) determining the reflectivity of the coating (22) for near infrared light at the first wavelength λ_{NIR}, which is incident on the coating (22) at the angle of incidence of 35° (S86)
g2) comparing the reflectivity determined in step f2) with the reflectivity determined in step c) (S87)
h2.1) should the comparison carried out in step g2) determine that the reflectivity determined in step f2) does not drop below the reflectivity determined in step c) by more than 10%:
i2.1) modifying the parameters that describe the first layer sequence (25) (S88) and
j2.1) carrying out steps c) to d);
h.2.2) should the comparison carried out in step g2) determine that the reflectivity determined in step f2) drops below the reflectivity determined in step c) by more than 10%
k2.2) outputting the parameters describing the first layer sequence (25) as the parameters describing the layer sequence (25) of the coating (22) (S89).

14. Computer-implemented method for designing a spectacle lens (20) according to Claim 12, **characterized in that** determining the layer sequence (25) comprises the following steps:
a) providing parameters that describe a first layer sequence (25) of a coating (22) (S81);
b) providing a first limit of at least 20% that represents the first reflectivity (S82);
c) determining the reflectivity of the coating (22) for near infrared light at the first wavelength λ_{NIR}, which is incident on the coating (22) at the angle of incidence of 0° (S83);
d) determining the reflectivity of the coating (22) for near infrared light at the first wavelength λ_{NIR}, which is incident on the coating (22) at the angle of incidence of 35° (S86);
e) comparing the reflectivity determined in step
c) with the first limit (S84);
f1) should the comparison carried out in step e) determine that the first limit was not exceeded by the reflectivity determined in step c):
g1) modifying the parameters that describe the first layer sequence (25) (S85) and
h1) carrying out steps c) to e);
f2) should the comparison carried out in step e) determine that the first limit was exceeded:
g2) comparing the reflectivity determined in step d) with the reflectivity determined in step c) (S87)
h2.1) should the comparison carried out in step g2) determine that the reflectivity determined in step d) does not drop below the reflectivity determined in step c) by more than 10%:
i2.1) modifying the parameters that describe the first layer sequence (25) (S88) and
j2.1) carrying out steps c) to e);
h2.2) should the comparison carried out in step g2) determine that the reflectivity determined in step d) drops below the reflectivity determined in step c) by more than 10%:
k2.2) outputting the parameters describing the first layer sequence (25) as the parameters describing the layer sequence (25) of the coating (22) (S89).

15. Method (70) for producing a spectacle lens (20) comprising a lens substrate (21) and comprising a coating (22) that is applied to the lens substrate, with a layer sequence (25) forming the coating (22), wherein the method comprises the following steps:
- providing a lens substrate (21),
- applying the layer sequence (25) onto the lens substrate (21), wherein the layer sequence (25) is applied with the stipulation that the coating (22) has a first reflectivity of at least 20% for near infrared light at a first wavelength λ_{NIR}, which impinges on the coating (22) at an angle of incidence of 0°, and a second reflectivity for near infrared light at the first wavelength λ_{NIR}, which impinges on the coating (22) at an angle of incidence of 35°, said second reflectivity being reduced by at least 10% in relation to the first reflectivity.

## Revendications

1. Verre de lunettes (20) comprenant un substrat de lentille (21) et un revêtement (22) appliqué sur le substrat de lentille, le revêtement (22) ayant, pour une lumière proche de l'infrarouge d'une première longueur d'onde λ_{NIR} qui est incidente au revêtement avec un angle d'incidence de 0°, une première réflectivité d'au moins 20 %, **caractérisé en ce que** le revêtement a, pour une lumière proche de l'infrarouge de première longueur d'onde λ_{NIR} qui est incidente au revêtement avec un angle d'incidence de 35°, une deuxième réflectivité réduite d'au moins 10 % en chiffres absolus par rapport à la première réflectivité.

2. Verre de lunettes selon la revendication 1, **caractérisé par** une transmission moyenne d'au moins 95 % ou d'au moins 98 % dans une gamme de longueurs d'onde visibles de 400 nm à 700 nm et avec un angle d'incidence de 0°.

3. Verre de lunettes selon l'une des revendications précédentes, **caractérisé en ce que** la longueur d'onde λ_{NIR} est située dans la zone proche de l'infrarouge dans une gamme de longueurs d'onde du groupe comprenant les gammes de longueurs d'onde allant de 780 nm à 1500 nm, de 800 nm à 1200 nm et de 850 nm à 1100 nm.

4. Verre de lunettes selon l'une des revendications précédentes, **caractérisé en ce que** le revêtement (22) a, dans une gamme de longueurs d'onde qui comprend la longueur d'onde λ_{NIR} dans la zone proche de l'infrarouge, une réflectivité réduite d'au moins 10 % par rapport à l'angle d'incidence de 0°.

5. Verre de lunettes selon l'une des revendications précédentes, **caractérisé en ce que** le revêtement (22) a, pour un angle d'incidence de 0°, une réflectivité dans un groupe de réflectivités d'au moins 25 %, d'au moins 30 %, d'au moins 40 % et d'au moins 50 % pour la longueur d'onde λ_{NIR} dans la zone proche de l'infrarouge.

6. Verre de lunettes selon l'une des revendications précédentes, **caractérisé en ce que** le revêtement (22) a, pour un angle d'incidence de 35°, une réflectivité réduite par rapport à l'angle d'incidence de 0° d'au moins un facteur parmi un groupe comprenant 15 %, 20 %, 25 % et 30 %, à la longueur d'onde λ_{NIR} dans la zone proche de l'infrarouge.

7. Verre de lunettes selon l'une des revendications précédentes, **caractérisé en ce que** le revêtement (22) a, dans une gamme d'angles d'incidence de 30° à 45°, une réflectivité réduite d'au moins 10 % par rapport à l'angle d'incidence de 0° à la longueur d'onde λ_{NIR} dans la zone proche de l'infrarouge.

8. Verre de lunettes selon l'une des revendications précédentes, **caractérisé en ce que** le substrat de lentille (21) comporte une surface avant (23) et une surface arrière (24) et le revêtement (22) est appliqué sur la surface avant du substrat de lentille (21).

9. Verre de lunettes selon la revendication 8, **caractérisé en ce que** le substrat de lentille (21) comprend en outre un absorbeur d'IR.

10. Verre de lunettes selon la revendication 8 ou 9, **caractérisé en ce qu'**un revêtement (22) selon l'une des revendications précédentes est en outre appliqué sur la surface arrière (24) du substrat de lentille (21).

11. Verre de lunettes selon l'une des revendications précédentes, **caractérisé en ce que** le substrat de lentille (21) comporte une surface avant (22) et une surface arrière (24), la surface arrière comportant un revêtement antireflet destiné à au moins une gamme d'un groupe comprenant la lumière visible, la lumière IR et la lumière UV et/ou la surface avant comporte un revêtement réfléchissant destiné à au moins une gamme d'un groupe comprenant la lumière UV et la lumière bleue de longueur d'onde courte.

12. Procédé mis en œuvre sur ordinateur (60) et destiné à concevoir un verre de lunettes (20) pourvu d'un substrat de verre (21) et d'un revêtement (22) appliqué sur le substrat de verre (21) et comportant une succession de couches (25) formant le revêtement (22), le procédé comprenant l'étape suivante :
- déterminer la succession de couches (25), la détermination de la succession de couches (25) étant effectuée à condition que le revêtement (22) ait, pour la lumière proche de l'infrarouge d'une première longueur d'onde λ_{NIR} qui est incidente au revêtement (22) avec un angle d'incidence de 0°, une première réflectivité d'au moins 20 % et, pour la lumière proche de l'infrarouge de la première longueur d'onde λ_{NIR}, qui est incidente au revêtement (22) avec un angle d'incidence de 35°, une deuxième réflectivité réduite d'au moins 10 % par rapport à la première réflectivité.

13. Procédé mis en œuvre sur ordinateur et destiné à concevoir un verre de lunettes (20), selon la revendication 12, **caractérisé en ce que** la détermination de la succession de couches (25) comprend les étapes suivantes :
a) produire des paramètres décrivant une première succession de couches (25) d'un revêtement (22) (S81) ;
b) produire une première valeur limite d'au moins 20 % représentant la première réflectivité (S82) ;
c) déterminer la réflectivité du revêtement (22) pour une lumière proche de l'infrarouge de première longueur d'onde λ_{NIR} qui est incidente au revêtement (22) avec l'angle d'incidence de 0° (S83) ;
d) comparer la réflectivité déterminée à l'étape c) avec la première valeur de seuil (S84) ;
e1) dans le cas où la comparaison effectuée à l'étape d) ne révèle aucun dépassement vers le haut de la première valeur limite par la réflectivité déterminée à l'étape c) :
f1) modifier les paramètres décrivant la première succession de couches (25) (S85) et
g1) effectuer les étapes c) à d) ;
e2) dans le cas où la comparaison effectuée à l'étape d) révèle un dépassement vers le haut de la première valeur limite :
f2) déterminer la réflectivité du revêtement (22) pour une lumière proche de l'infrarouge de première longueur d'onde λ_{NIR} qui est incidente au revêtement (22) avec un angle d'incidence de 35° (S86),
g2) comparer la réflectivité déterminée à l'étape f2) avec la réflectivité déterminée à l'étape c) (S87),
h2.1) dans le cas où la comparaison effectuée à l'étape g2) ne révèle aucun dépassement vers le bas de plus de 10 % de la réflectivité déterminée à l'étape c) par la réflectivité déterminée à l'étape f2):
i2.1) modifier les paramètres décrivant la première succession de couches (25) (S88) et
j2.1) effectuer les étapes c) à d),
h2.2) dans le cas où la comparaison effectuée à l'étape g2) ne révèle aucun dépassement vers le bas de plus de 10 % de la réflectivité déterminée à l'étape c) par la réflectivité déterminée à l'étape f2) :
k2.2) délivrer en sortie les paramètres décrivant la première succession de couches (25) en tant que paramètres décrivant la succession de couches (25) du revêtement (22) (S89).

14. Procédé mis en œuvre sur ordinateur et destiné à concevoir un verre de lunettes (20) selon la revendication 12, **caractérisé en ce que** la détermination de la succession de couches (25) comprend les étapes suivantes :
a) produire des paramètres décrivant une première succession de couches (25) d'un revêtement (22) (S81) ;
b) produire une première valeur limite d'au moins 20 % représentant la première réflectivité (S82) ;
c) déterminer la réflectivité du revêtement (22) pour une lumière proche de l'infrarouge de première longueur d'onde λ_{NIR} qui est incidente au revêtement (22) avec l'angle d'incidence de 0° (S83) ;
d) déterminer la réflectivité du revêtement (22) pour une lumière proche de l'infrarouge de première longueur d'onde λ_{NIR} qui est incidente au revêtement (22) avec l'angle d'incidence de 35° (S86) ;
e) comparer la réflectivité déterminée à l'étape c) avec la première valeur limite (S84) ;
f1) dans le cas où la comparaison effectuée à l'étape e) ne révèle aucun dépassement vers le haut de la première valeur limite par la réflectivité déterminée à l'étape c) :
g1) modifier les paramètres décrivant la première succession de couches (25) (S85) et
h1) effectuer les étapes c) à e) ;
f2) dans le cas où la comparaison effectuée à l'étape e) révèle un dépassement vers le haut de la première valeur limite :
g2) comparer la réflectivité déterminée à l'étape d) avec la réflectivité déterminée à l'étape c) (S87),
h2.1) dans le cas où la comparaison effectuée à l'étape g2) ne révèle aucun dépassement vers le bas de plus de 10 % de la réflectivité déterminée à l'étape c) par la réflectivité déterminée à l'étape d) :
i2.1)modifier les paramètres décrivant la première succession de couches (25) (S88) et
j2.1)effectuer les étapes c) à e) ;
h2.2) dans le cas où la comparaison effectuée à l'étape g2) révèle un dépassement vers le bas de plus de 10 % de la réflectivité déterminée à l'étape c) par la réflectivité déterminée à l'étape d) :
k2.2) délivrer en sortie les paramètres décrivant la première succession de couches (25) comme paramètres décrivant la succession de couches (25) du revêtement (22) (S89).

15. Procédé (70) de fabrication d'un verre de lunettes (20) comprenant un substrat de lentille (21) et un revêtement (22) appliqué sur le substrat de lentille pourvu d'une succession de couches (25) formant le revêtement (22), le procédé comprenant les étapes suivantes :
- produire un substrat de lentille (21) ;
- appliquer la succession de couches (25) sur le substrat de lentille (21), l'application de la succession de couches (25) étant réalisée à condition que le revêtement (22) ait, pour la lumière proche de l'infrarouge d'une première longueur d'onde λ_{NIR} qui est incidente au revêtement (22) avec un angle d'incidence de 0°, une première réflectivité d'au moins 20 % et, pour la lumière proche de l'infrarouge de la première longueur d'onde λ_{NIR}, qui est incidente au revêtement (22) avec un angle d'incidence de 35°, une deuxième réflectivité réduite d'au moins 10 % par rapport à la première réflectivité.
